# EUROPEAN PATENT APPLICATION

(11) **EP 4 769 181 A1**
(43) Date of publication of application: **01.07.2026**
(21) Application number: 24864184.7
(22) Date of filing: 25.06.2024
(51) Int. Cl.: G06F 16/957, G06F 9/50

(54) **METHOD FOR IMPLEMENTING PAGE ACCESS, SERVER AND SYSTEM**

(30) Priority: 12.09.2023 CN 202311177481
(71) Applicant: HUAWEI TECHNOLOGIES CO., LTD., Shenzhen 518129 (CN)
(72) Inventor: YI, Ru, Shenzhen, Guangdong 518129 (CN); ZHANG, Jinyu, Shenzhen, Guangdong 518129 (CN); CHEN, Pengyu, Shenzhen, Guangdong 518129 (CN)
(74) Representative: Gill Jennings & Every LLP
(86) International application number: PCT/CN2024/101452
(87) International publication number: WO 2025/055459

(57) **Abstract**

This application provides a method and system for implementing page access, and a server. A plurality of preset storage spaces used to store page directories are provided in the server, and statuses of the page directories are marked when the page directories in the preset storage spaces are migrated, to maintain availability of a user service when a server is added to and/or deleted from a distributed database cluster, thereby helping improve user experience. The method includes: When the server is added to and/or deleted from the distributed database cluster, after sending a first page directory in a first preset storage space to a second server, a first server marks the first preset storage space in the first server as being in an invalid state, and when receiving a first query request from a third server, the first server returns a query failure response based on the invalid state, so that the third server performs redirection until a page directory requested by the first query request is found.

## Description

This application claims priority to Chinese Patent Application No. 202311177481.9, filed with the China National Intellectual Property Administration on September 12, 2023 and entitled "METHOD AND SYSTEM FOR IMPLEMENTING PAGE ACCESS, AND SERVER", which is incorporated herein by reference in its entirety.

### TECHNICAL FIELD

This application relates to the field of distributed database technologies, and in particular, to a method and system for implementing page access, and a server.

### BACKGROUND

A distributed database cluster in a shared disk (share disk) architecture includes a plurality of servers that handle client access, and the plurality of servers access a same shared disk device, to implement data sharing. Data in a database is usually stored in a page format. Signaling overheads for the servers to directly access the shared disk device are usually high. To reduce the overheads, a page is usually specified as belonging to one server, the page is then loaded to a page buffer pool of the server, and a page directory is also stored in the specific server. When a server in the database cluster needs to access the page, the server may obtain the page directory through network communication between servers, then find, based on the page directory, the server to which the page belongs, and obtain the page from the server.

Scalability of a distributed database means that a capacity of the database may be adjusted by performing scale-out or scale-in on the distributed database cluster, to minimize costs while ensuring database performance. For example, when a service volume increases, a server may be added for scale-out, to improve a parallel processing capability of the entire database, and when the service volume decreases, a server may be deleted for scale-in, to reduce operation costs. However, when scale-out or scale-in is performed on the distributed database cluster, a page directory stored in each server in the cluster needs to be reallocated in a new cluster after the scale-out or scale-in, so that servers in the new cluster after the scale-out or scale-in can implement load balancing.

In this case, a current method in mainstream databases is to freeze a service request by adding a global lock to the entire database when the page directory is reallocated, until scale-out or scale-in of the database is completed. In this period, all service access supported by the database is suspended. This can avoid a page access failure caused by page directory migration during scale-out or scale-in of the database cluster. However, availability of a user service is severely affected, causing poor user experience.

### SUMMARY

This application provides a method and system for implementing page access, and a server, to grant service access permission to a client and maintain availability of a user service when a server is added to and/or deleted from a distributed database cluster, thereby helping improve user experience.

According to a first aspect, this application provides a method for implementing page access. The method includes: When a server is added to and/or deleted from a distributed database cluster, a first server sends a first page directory in a first preset storage space to a second server, deletes the first page directory, and marks a status of the first preset storage space in the first server as an invalid state, where the first page directory indicates a correspondence between at least one page and a server that stores the at least one page, each server in the distributed database cluster includes a plurality of preset storage spaces of a same quantity, and each of the plurality of preset storage spaces is in a valid state in only one server. The first server receives a first query request from a third server, where the first query request is used to query for a page directory of a first page, and the first query request carries identification information of the first page. The first server determines, based on the identification information of the first page, that a preset storage space corresponding to the page directory of the first page is the first preset storage space, and learns that the status of the first preset storage space in the first server is the invalid state. The first server sends a first query response to the third server, where the query response indicates that the query corresponding to the first query request fails.

It should be understood that each server in the distributed database cluster includes the plurality of preset storage spaces of the same quantity, and the plurality of preset storage spaces are used to store page directories. In the distributed database cluster, each of the plurality of preset storage spaces is in the valid state in only one server. It should be understood that, if a preset storage space in a server is in a valid state, it means that the preset storage space is available in the server, and the preset storage space needs to store or has stored a page directory of a specified page. "Need to store" means that when the server receives a query request for a page directory of a page, if a preset storage space that corresponds to the page and that is in the server is in a valid state, but a page directory of the target page is not currently stored, the server needs to create the page directory of the target page and then store the page directory of the target page in the preset storage space. "Specified page" refers to a page whose page directory needs to be stored in the preset storage space according to a preset storage rule.

When the server is added to and/or deleted from the distributed database cluster, the first page directory that is in the first preset storage space and that is sent by the first server is correspondingly stored by the second server in the first preset storage space in the second server. After migration of the first page directory from the first preset storage space in the first server to the first preset storage space in the second server is completed, the first preset storage space is marked as being in an invalid state in the first server, and is marked as being in a valid state in the second server.

It should be understood that the first page directory needs to be migrated from the first server to the second server because when the server is added to and/or deleted from the distributed database cluster, a page directory stored in an original server in the cluster needs to be reallocated to servers obtained after the server is added to and/or deleted from the cluster. In the reallocation in embodiments of this application, all page directories in a single preset storage space are used as a minimum reallocation unit, and load balancing calculation is performed, based on a preset load balancing algorithm, on the servers obtained after the server is added to and/or deleted from the distributed database cluster. A calculation result shows that the first preset storage space needs to be valid in the second server, in other words, the first page directory needs to be stored in the first preset storage space in the second server. Therefore, the first page directory in the first preset storage space in the first server is migrated to the first preset storage space in the second server.

It should be further understood that the first page directory refers to all page directories in the first preset storage space, and the first preset storage space may store a page directory of one page or page directories of a plurality of pages. This is not limited in this application.

In embodiments of this application, after receiving the first query request from the third server, the first server determines, based on the identification information of the first page, that the page directory of the first page needs to be stored in the first preset storage space. However, in this case, the first server has sent the first page directory in the first preset storage space to the second server, and the first preset storage space in the first server is in the invalid state. In other words, in this case, the page directory of the first page does not exist in the first preset storage space in the first server. Therefore, the first server returns the first query response to the third server, to indicate that the query corresponding to the first query request fails. According to the method provided in this application, a preset storage space is provided to store a page directory, and a status of the preset storage space is marked, so that when a query request needs to access the preset storage space, whether to-be-queried information is stored in the current preset storage space can be directly learned based on the status of the preset storage space, and no complex search needs to be performed. This helps improve page access efficiency of a user.

With reference to the first aspect, in some implementations of the first aspect, before the first server sends the first page directory to the second server, the method further includes: The first server receives a first notification message from a cluster management server, where the first notification message is used to notify the distributed database cluster to add a server and/or delete a server, the first notification message includes identification information of a plurality of first target servers, and the plurality of first target servers include the second server. The first server determines, based on the identification information of the plurality of first target servers, to migrate the first page directory from the first preset storage space in the first server to the second server.

It should be understood that a server that provides a cluster management function in the distributed database cluster may be any one of the first server, the second server, and the third server, or may be a server that is independently disposed other than the first server, the second server, and the third server. This is not limited in this application.

In embodiments of this application, the cluster management server that is independently disposed provides the cluster management function, and the cluster management function is separated from a service bearer function. This helps reduce computing power consumption of a server handling client service access, and helps maintain stability of performance of the distributed database cluster.

With reference to the first aspect, in some implementations of the first aspect, that the first server determines, based on the identification information of the plurality of first target servers, to migrate the first page directory from the first preset storage space in the first server to the second server includes: The first server performs calculation on identification information of each of the plurality of first target servers by using a consistent hash algorithm, to obtain a hash value of each first server, and maps hash values of the plurality of first target servers to a consistent hash ring, to obtain corresponding positions of the hash values of the plurality of first target servers on the consistent hash ring. The first server obtains a hash value of each of the plurality of preset storage spaces, and maps hash values of the plurality of preset storage spaces to the consistent hash ring, to obtain corresponding positions of the hash values of the plurality of preset storage spaces on the consistent hash ring. The first server determines, based on the corresponding positions of the hash values of the plurality of first target servers on the consistent hash ring and the corresponding positions of the hash values of the plurality of preset storage spaces on the consistent hash ring, to migrate the first page directory from the first preset storage space in the first server to the second server, where the plurality of preset storage spaces include the first preset storage space.

It should be understood that the plurality of first target servers are the servers in the distributed database cluster after the server is added to and/or deleted from the distributed database cluster. The identification information of the plurality of first target servers is used to uniquely identify each server, and may be device code, an internet protocol (internet protocol, IP) address, or a protocol port number of each server, or a unique number of each server in the cluster. This is not limited in this application.

It should be further understood that the first server allocates, by using the consistent hash algorithm as the preset load balancing algorithm, a server in which each of the plurality of preset storage spaces needs to be in a valid state, and the preset storage space is provided to store a page directory. Therefore, allocation of the plurality of preset storage spaces is allocation of page directories stored in the plurality of preset storage spaces.

It should be noted that, that the first server determines, based on the corresponding positions of the hash values of the plurality of first target servers on the consistent hash ring and the corresponding positions of the hash values of the plurality of preset storage spaces on the consistent hash ring, to allocate the first preset storage space to the second server means that after the server is added to and/or deleted from the distributed database cluster, the first preset storage space needs to be in the valid state in the second server. The first server determines, based on the first notification message, that the first preset storage space that is currently valid in the first server needs to be valid in the second server after the server is added to and/or deleted from the cluster. Therefore, the first page directory in the first preset storage space in the first server is migrated to the second server, to reallocate a server corresponding to the first page directory.

In embodiments of this application, load balancing allocation is performed on the plurality of preset storage spaces in each server in the cluster by using the consistent hash algorithm, so that storage of page directories in each server is in a balanced state after the server is added to and/or deleted from the cluster. This helps stable running of the cluster, and helps ensure performance of a service borne by the cluster.

With reference to the first aspect, in some implementations of the first aspect, before the first server sends the first page directory in the first preset storage space to the second server, the method further includes: The first server determines identification information of a plurality of second target servers, where the plurality of second target servers include the first server. The first server marks, based on the identification information of the plurality of second target servers, initial statuses of all or a part of preset storage spaces in the plurality of preset storage spaces in the first server as valid states, where the all or part of preset storage spaces include the first preset storage space.

It should be understood that, if the case of adding and/or deleting the server described in the first aspect is that the server is added to and/or deleted from the cluster the first time after the distributed database cluster is initialized, the all or part of preset storage spaces include the first preset storage space.

In embodiments of this application, the first server provides the cluster management function, and the first server obtains the identification information of the plurality of second target servers through interaction between internal functional modules, and performs initialization. When memory of the server is sufficient, the first server provides the cluster management function. This helps reduce device costs.

With reference to the first aspect, in some implementations of the first aspect, before marking the initial statuses of the all or part of preset storage spaces in the plurality of preset storage spaces in the first server as the valid states, the method further includes: The first server performs calculation on identification information of each of the plurality of second target servers by using the consistent hash algorithm, to obtain a hash value of each second target server, and maps hash values of the plurality of second target servers to the consistent hash ring, to obtain corresponding positions of the hash values of the plurality of second target servers on the consistent hash ring. The first server obtains the hash value of each of the plurality of preset storage spaces, and maps the hash values of the plurality of preset storage spaces to the consistent hash ring, to obtain the corresponding positions of the hash values of the plurality of preset storage spaces on the consistent hash ring. The first server determines initial statuses of the plurality of preset storage spaces based on the corresponding positions of the hash values of the plurality of second target servers on the consistent hash ring and the corresponding positions of the hash values of the plurality of preset storage spaces on the consistent hash ring.

It should be understood that, when the distributed database cluster is started up, the statuses of the plurality of preset storage spaces in the servers are all invalid states. After obtaining the identification information of the plurality of second target servers initially included in the cluster, the servers obtain a hash value of each second target server, maps hash values of the plurality of second target servers to the consistent hash ring, to obtain corresponding positions of the hash values of the plurality of second target servers on the consistent hash ring, and allocates the plurality of preset storage spaces to the plurality of second target servers based on the corresponding positions of the hash values of the plurality of second target servers on the consistent hash ring and the corresponding positions of the hash values of the plurality of preset storage spaces on the consistent hash ring. After obtaining an initial allocation result of the plurality of preset storage spaces based on the identification information of the plurality of second target servers, the first server marks a preset storage space allocated to the first server as being in a valid state.

In embodiments of this application, the plurality of preset storage spaces are allocated when the distributed database cluster is started up, and each server marks, based on an obtained allocation result, a preset storage space allocated to the server as being in a valid state. In this way, during use of the distributed database, a page directory specified for a server for storage may be correspondingly stored in a preset storage space in a valid state in the server. This helps maintain a load balancing state of servers in the cluster.

With reference to the first aspect, in some implementations of the first aspect, that the first server determines the identification information of the plurality of second target servers includes: The first server receives a second notification message from the cluster management server, where the second notification message is used to notify the distributed database cluster to perform initialization, and the second notification message includes the identification information of the plurality of second target servers. The first server determines the identification information of the plurality of second target servers based on the second notification message.

With reference to the first aspect, in some implementations of the first aspect, that the first server determines, based on the identification information of the first page, that the preset storage space corresponding to the page directory of the first page is the first preset storage space includes: The first server performs calculation on the identification information of the first page by using the consistent hash algorithm, to obtain a hash value of the first page, and maps the hash value of the first page to the consistent hash ring, to obtain a position of the first page on the consistent hash ring. The first server determines, based on the position of the first page on the consistent hash ring and the corresponding positions of the hash values of the plurality of preset storage spaces on the consistent hash ring, that the first preset storage space is the preset storage space corresponding to the page directory of the first page.

It should be understood that, for the first page, the page directory of the first page is stored based on a mapping relationship between the hash value of the first page and a hash value of the first preset storage space during creation. For the page directory that is of the first page and that is stored in the first preset storage space, a home server that is of the first page and that is included in the page directory may change based on a property (a read request/write request) of a page access request, but the page directory of the first page is always stored in the first preset storage space. If the first preset storage space is in a valid state in a server, the page directory of the first page is stored in a first preset storage space in the server.

With reference to the first aspect, in some implementations of the first aspect, after sending the first page directory in the first preset storage space to the second server, the first server records identification information of the second server in the first preset storage space in the first server. After the first server learns that the status of the first preset storage space in the first server is the invalid state, the method further includes: The first server obtains the identification information that is of the second server and that is recorded in the first preset storage space in the first server. The first server sends the first query response to the third server, where the query response indicates that the query corresponding to the first query request fails, and the first query response carries the identification information of the second server.

In embodiments of this application, after sending the first page directory in the first preset storage space to the second server, the first server records the identification information of the second server in the first preset storage space, so that when the first query request fails, the identification information of the second server may be carried in a request response and returned to the third server. This helps the third server redetermine a to-be-accessed server.

With reference to the first aspect, in some implementations of the first aspect, the first page directory is stored in the first preset storage space in the first server in a form of doubly linked list, or is stored in the first server in a form of hash table.

With reference to the first aspect, in some implementations of the first aspect, the method further includes: The first server receives a second query request from the third server, where the second query request is used to query for a page directory of a second page, and the second query request carries identification information of the second page. The first server determines, based on the identification information of the second page, that a preset storage space corresponding to the page directory of the second page is a second preset storage space. When finding that a status of the second preset storage space in the first server is a valid state, the first server obtains the page directory of the second page from the second preset storage space in the first server. The first server sends the page directory of the second page to the third server.

According to a second aspect, this application further provides a method for implementing page access, including: A second server receives a first page directory, stores the first page directory in a first preset storage space in the second server, and marks a status of the first preset storage space in the second server as a valid state. The second server receives a first query request from a third server, where the first query request is used to query for a page directory of a first page, and the first query request carries identification information of the first page. The second server determines, based on the identification information of the first page, that a preset storage space corresponding to the page directory of the first page is the first preset storage space, and learns that the status of the first preset storage space in the second server is the valid state. The second server obtains the page directory of the first page from the first preset storage space in the second server. The second server sends the page directory of the first page to the third server.

It should be understood that a first page directory in a first preset storage space in a first server is also correspondingly stored in the first preset storage space in the second server. Each server has a first preset storage space, identification information of the first preset storage space in each server is the same, and the first preset storage space is in a valid state in only one server.

With reference to the second aspect, in some implementations of the second aspect, the first page directory is stored in the first preset storage space in the second server in a form of doubly linked list. That the second server obtains the page directory of the first page from the first preset storage space in the second server includes: The second server searches the doubly linked list in a traversal manner based on the identification information of the first page, until a target node on which the page directory of the first page is stored in the doubly linked list is found, and obtains the page directory of the first page from the target node.

It should be understood that the doubly linked list is a data storage structure. When a data volume of a distributed database is less than a preset threshold, the page directory may be stored in a plurality of preset storage spaces in the form of doubly linked list. During searching, a page directory corresponding to an identifier of a target page is found by traversing the doubly linked list in the preset storage spaces.

In embodiments of this application, in a manner of storing the page directory in the form of doubly linked list, search efficiency is high when the data volume of the distributed database is less than the preset threshold.

With reference to the second aspect, in some implementations of the second aspect, the first page directory is stored in the second server in a form of hash table. That the second server obtains the page directory of the first page from the first preset storage space in the second server includes: The second server performs calculation on the identification information of the first page by using a consistent hash algorithm, to obtain a hash value of the first page. The second server finds, in the hash table, a target array corresponding to the hash value of the first page, and obtains the page directory of the first page from the target array.

It should be understood that, when the first page directory is stored in the second server in the form of hash table, the target array corresponding to the hash value of the first page may be quickly found by performing hash search by using the hash value of the first page, and then the page directory of the first page is obtained from the target array. In this manner, when the data volume of the distributed database is greater than the preset threshold, a search range can be quickly narrowed down to the target array, thereby improving search efficiency.

With reference to the second aspect, in some implementations of the second aspect, the method further includes: The second server receives a second query request from the third server, where the second query request is used to query for a page directory of a second page, and the second query request carries identification information of the second page. The second server determines, based on the identification information of the second page, that a preset storage space corresponding to the page directory of the second page is a second preset storage space. When finding that a status of the second preset storage space in the second server is an invalid state, the second server sends a query response to the third server, where the query response indicates that the query fails.

According to a third aspect, this application further provides a method for implementing page access, including: A third server receives a first access request from a client, where the first access request is used to request to access a first page, and the first access request carries identification information of the first page. The third server determines, based on the identification information of the first page, that a page directory of the first page is stored in a first server. The third server sends a first query request to the first server, where the first query request is used to query for the page directory of the first page, and the first query request carries the identification information of the first page. The third server receives a first query response from the first server, where the first query response indicates that the query corresponding to the first query request fails. The third server redetermines, based on a preset redirection algorithm, that the page directory of the first page is stored in a second server. The third server sends the first query request to the second server. The third server receives the page directory of the first page from the second server.

It should be understood that, servers in a cluster receive a server addition and/or deletion notification in sequence. Therefore, there is a possible scenario in which when the first server has completed migration of a first page directory in the first preset storage space, the third server still does not receive the server addition and/or deletion notification from the distributed database cluster. If the third server receives a first page access request from a client in this case, when determining a server corresponding to the page directory of the first page that is requested to access by using the first page access request, the third server can still perform determining only based on a correspondence between the identification information of the first page and an original server in the cluster, to determine that the page directory of the first page is stored in the first server, and therefore sends the first query request to the first server. However, all information in the first preset storage space that stores the page directory of the first page in the first server has been migrated to the second server. Therefore, the query request from the third server to the first server fails.

It should be understood that the preset redirection algorithm is triggered after the first query request fails, and is used to redetermine the server in which the page directory of the first page is located. A determining manner includes any one of the following: (1) The third server determines, based on a migration record carried in the first query response, that the page directory of the first page is migrated to the second server. (2) After receiving a server addition and/or deletion notification sent by a server that provides a cluster management function, the third server determines, based on a result of load balancing calculation performed on servers obtained after a server is added and/or deleted, that the page directory of the first page is stored in the second server. (3) The third server predicts, based on a preset load balancing algorithm, that the page directory of the first page is stored in the second server. The foregoing determining manners are described in detail in subsequent embodiments in different cases, and details are not described herein.

In embodiments of this application, after the query request from the third server to the first server fails, the third server may still redetermine, based on the preset redirection algorithm, the server corresponding to the page directory of the first page. This helps obtain the page directory of the first page, and helps implement a page access request from the client.

With reference to the third aspect, in some implementations of the third aspect, the first query response carries identification information of the second server. That the third server redetermines, based on the preset redirection algorithm, that the page directory of the first page is stored in the second server includes: The third server determines, based on the first query response, that the first page directory is stored in the second server.

With reference to the third aspect, in some implementations of the third aspect, before the third server receives the first access request from the client, the method further includes: The third server receives a second notification message from a cluster management server, where the second notification message is used to notify the distributed database cluster to perform initialization, the second notification message includes identification information of a plurality of second target servers, and the plurality of second target servers include the third server. The third server performs calculation on identification information of each of the plurality of second target servers by using a consistent hash algorithm, to obtain a hash value of each second target server, and maps hash values of the plurality of second target servers to a consistent hash ring, to obtain corresponding positions of the hash values of the plurality of second target servers on the consistent hash ring. The third server obtains a hash value of each of a plurality of preset storage spaces, and maps hash values of the plurality of preset storage spaces to the consistent hash ring, to obtain corresponding positions of the hash values of the plurality of preset storage spaces on the consistent hash ring. The third server determines initial statuses of the plurality of preset storage spaces based on the corresponding positions of the hash values of the plurality of second target servers on the consistent hash ring and the corresponding positions of the hash values of the plurality of preset storage spaces on the consistent hash ring. The third server marks initial statuses of all or a part of preset storage spaces in the plurality of preset storage spaces in the third server as valid states.

With reference to the third aspect, in some implementations of the third aspect, that the third server determines, based on the identification information of the first page, that the page directory of the first page is stored in the first server includes: The third server performs calculation on the identification information of the first page by using the consistent hash algorithm, to obtain a hash value of the first page, and maps the hash value of the first page to the consistent hash ring, to obtain a position of the hash value of the first page on the consistent hash ring. The third server determines, based on the position of the hash value of the first page on the consistent hash ring and the corresponding positions of the hash values of the plurality of second target servers on the consistent hash ring, that the page directory of the first page is stored in the first server.

With reference to the third aspect, in some implementations of the third aspect, that the third server redetermines, based on the preset redirection algorithm, that the page directory of the first page is stored in the second server includes: The third server searches, starting from a position of a hash value of the first server on the consistent hash ring, the consistent hash ring in a preset direction based on the corresponding positions of the hash values of the plurality of second target servers on the consistent hash ring, to determine the second server, where a corresponding position of a hash value of the second server on the consistent hash ring is after the first server and adjacent to the first server.

Optionally, the preset direction may be a clockwise direction or a counterclockwise direction. This is not limited in this application.

With reference to the third aspect, in some implementations of the third aspect, after the third server receives the first query response from the first server, the method further includes: The third server receives a first notification message from a cluster management server, where the first notification message is used to notify a distributed database cluster to add a server and/or delete a server, the first notification message includes identification information of a plurality of first target servers, and the plurality of first target servers include the second server. That the third server redetermines, based on the preset redirection algorithm, that the first page directory is stored in the second server includes: The third server performs calculation on the identification information of the first page by using a consistent hash algorithm, to obtain a hash value of the first page, and maps the hash value of the first page to a consistent hash ring, to obtain a position of the hash value of the first page on the consistent hash ring. The third server performs calculation on identification information of each of the plurality of first target servers by using the consistent hash algorithm, to obtain a hash value of each first target server, and maps hash values of the plurality of first target servers to the consistent hash ring, to obtain corresponding positions of the hash values of the plurality of first target servers on the consistent hash ring. The third server determines, based on the position of the hash value of the first page on the consistent hash ring and the corresponding positions of the hash values of the plurality of first target servers on the consistent hash ring, that the page directory of the first page is stored in the second server.

With reference to the third aspect, in some implementations of the third aspect, the method further includes: The third server receives a second access request from the client, where the second access request is used to request to access a second page, and the second access request carries identification information of the second page. The third server determines, based on the identification information of the second page, that a page directory of the second page is stored in the second server. The third server sends a second query request to the second server, where the second query request is used to query for the page directory of the second page, and the second query request carries the identification information of the second page. The third server receives a second query response from the second server, where the second query response indicates that the query corresponding to the second query request fails. The third server redetermines, based on the preset redirection algorithm, that the page directory of the second page is stored in the first server. The third server sends the second query request to the first server. The third server receives the page directory of the second page from the first server.

With reference to the third aspect, in some implementations of the third aspect, that the third server redetermines, based on the preset redirection algorithm, that the page directory of the second page is stored in the first server includes: The third server performs calculation on the identification information of the second page by using the consistent hash algorithm, to obtain a hash value of the second page, and maps the hash value of the second page to the consistent hash ring, to obtain a position of the hash value of the second page on the consistent hash ring. The third server determines, based on the position of the hash value of the second page on the consistent hash ring and corresponding positions of hash values of a plurality of second target servers on the consistent hash ring, that the page directory of the second page is stored in the first server.

According to a fourth aspect, this application provides a system for implementing page access. The system includes a first server configured to implement the method for implementing page access in any possible implementation of the first aspect, a second server configured to implement the method for implementing page access in any possible implementation of the second aspect, and a third server configured to implement the method for implementing page access in any possible implementation of the third aspect.

According to a fifth aspect, this application provides a distributed database cluster. The cluster includes a first server configured to implement the method for implementing page access in any possible implementation of the first aspect, a second server configured to implement the method for implementing page access in any possible implementation of the second aspect, and a third server configured to implement the method for implementing page access in any possible implementation of the third aspect.

According to a sixth aspect, this application provides a server, including a module configured to perform the method for implementing page access in any one of the possible implementations of the first aspect, the second aspect, or the third aspect.

According to a seventh aspect, this application provides a server, including a processor. The processor is configured to perform the method for implementing page access in any one of the possible implementations of the first aspect, the second aspect, or the third aspect.

Optionally, the server may further include a memory, configured to store instructions and data. The memory is coupled to the processor. When the processor executes the instructions stored in the memory, the methods described in the foregoing aspects may be implemented.

Optionally, the server may further include a transceiver. The transceiver is used by the server to communicate with a hardware or software module of another server in a distributed database cluster.

According to an eighth aspect, this application provides a computer-readable storage medium, including a computer program. When the computer program is run on a computer, the computer is enabled to implement the method in any one of the possible implementations of the first aspect, the second aspect, or the third aspect.

According to a ninth aspect, this application provides a computer program product. The computer program product includes a computer program (which may also be referred to as code or instructions). When the computer program is run, a computer is enabled to perform the method in any one of the possible implementations of the first aspect, the second aspect, or the third aspect.

### BRIEF DESCRIPTION OF DRAWINGS

FIG. 1 is a diagram of an architecture of a distributed database cluster according to an embodiment of this application;
FIG. 2A and FIG. 2B are a schematic flowchart of a method for implementing page access according to an embodiment of this application;
FIG. 3 is a diagram of a method for allocating a plurality of preset storage spaces according to an embodiment of this application;
FIG. 4 is a diagram of a correspondence between a page and a server according to an embodiment of this application;
FIG. 5 is a diagram of a correspondence between a page and a preset storage space according to an embodiment of this application;
FIG. 6A and FIG. 6B are a schematic flowchart of another method for implementing page access according to an embodiment of this application;
FIG. 7A to FIG. 7D are a schematic flowchart of still another method for implementing page access according to an embodiment of this application;
FIG. 8 is an example diagram of a page directory migration process from a perspective of a cluster when a server is added according to an embodiment of this application;
FIG. 9 is an example diagram of a page directory migration process from a perspective of a cluster when a server is deleted according to an embodiment of this application;
FIG. 10 is a block diagram of a server according to an embodiment of this application; and
FIG. 11 is a block diagram of another server according to an embodiment of this application.

### DESCRIPTION OF EMBODIMENTS

The following describes technical solutions of this application with reference to accompanying drawings.

To clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that, in this application, terms such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

In addition, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

A distributed database cluster is a logically unified computer system formed by connecting, through a network, a plurality of physically dispersed servers that include a same database instance. A shared disk architecture is one of architectures of a distributed database. A distributed database cluster in the shared disk architecture includes a plurality of servers that handle client access and one shared disk device. The plurality of servers may access the same shared disk device, and provide a database service for a client through collaboration between the plurality of servers. A distributed database in the shared disk architecture is often used in scenarios such as large-scale enterprise-level applications and data warehouses due to its high availability, high performance, and scalability.

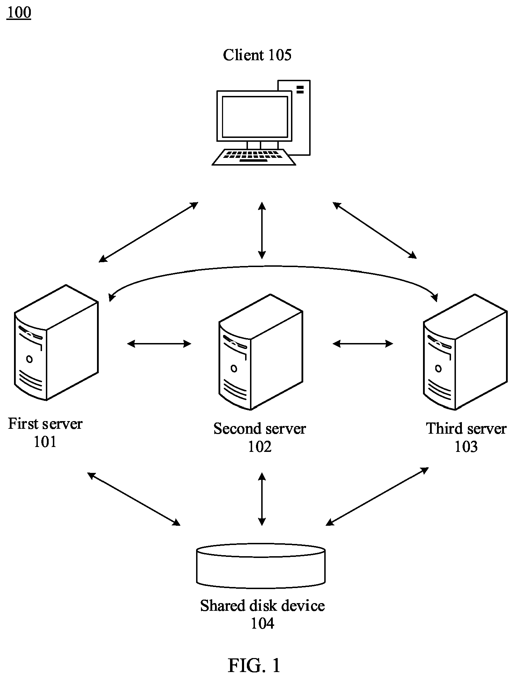

FIG. 1 shows a shared disk architecture 100 of a distributed database cluster system to which an embodiment of this application is applicable. As shown in FIG. 1, a distributed database cluster includes a first server 101, a second server 102, a third server 103, and a shared disk device 104. A client 105 is a program that corresponds to a service borne by a distributed database and that provides an operation interface for a user, or an electronic device on which the program is installed. Quantities of servers and clients shown in FIG. 1 are merely examples. During specific implementation, there may be an infinite quantity of servers and clients. This is not limited in this application.

The first server 101, the second server 102, and the third server 103 are servers that handle client access. The first server 101, the second server 102, and the third server 103 include a same database instance. Any one of the first server 101, the second server 102, and the third server 103 can access the shared disk device 104, and data in the shared disk device 104 is stored in a page format. A page buffer pool used to buffer a page is disposed in each of the first server 101, the second server 102, and the third server 103, and a page specified as belonging to a server is usually loaded in a page buffer pool of the server. In addition, the page buffer pool of each server further stores a page directory (page directory, PD) of a specified page, and the page directory is information about a correspondence between the page and a server to which the page belongs.

For example, when the second server 102 receives a page access request (for example, the page access request is a read request) from the client 105, if a page directory corresponding to a page requested by the page access request is stored in the first server 101, the second server needs to obtain the page directory from the first server 101, and then can obtain the page from a page buffer pool of a server (for example, the third server 103) to which the page belongs and that is indicated by the page directory. It can be learned that whether the page can be successfully accessed is closely related to whether the page directory can be obtained.

Scalability of a distributed database in a shared disk architecture is an important indicator for measuring performance of the database. "Scalability" means that the distributed database can flexibly adjust, based on a borne service volume, a quantity of servers that handle client access. To be specific, when a service volume borne by the distributed database increases and a capacity of servers in a cluster cannot support a service requirement, a new server may be added to expand a database capacity, thereby ensuring stability of service access and maintaining performance of each server. In contrast, if the service volume decreases and the capacity of the servers in the distributed database cluster exceeds the service requirement, an existing server in the cluster may be deleted to reduce running costs.

In a process of implementing a user page access request, a page directory of an accessed page inevitably needs to be obtained. A server storing the page directory needs to handle this part of access load. Therefore, when a server is added to and/or deleted from the distributed database cluster (that is, when scale-out or scale-in is performed on the distributed database), to implement load balancing of access volumes borne by servers in the cluster after the server is added to and/or deleted from the cluster, page directories stored in original servers in the cluster need to be reallocated. A real application cluster (real application cluster, RAC) launched by Oracle (Oracle) is a common shared disk architecture database. When a page directory is reallocated in Oracle RAC (in Oracle RAC, the page directory is referred to as a global resource directory (global resource directory, GRD)), a global lock is added to freeze service access to the database, and the global lock is released only after GRD redistribution is completed. In this manner, service access of the user is suspended during this period, and the user cannot access the database, affecting availability of a user service.

In view of this, this application provides a method for implementing page access. A plurality of preset storage spaces used to store page directories are provided in each server in a distributed database cluster, and whether the storage spaces are valid in the server is distinguished by marking statuses of the preset storage spaces. The server marks a preset storage space whose page directory has been migrated to another server as being in an invalid state when a server is added to and/or deleted from the distributed database cluster. Correspondingly, the preset storage space in the server that receives the page directory is marked as being in a valid state. When querying for a page directory, the server may determine, based on the marked state of the preset storage space, whether the page directory of a target page is stored in the server. If the page directory of the target page is not stored in the server, the server may further find, based on a preset redirection algorithm, a server in which the page directory of the target page is located. According to the method provided in this application, a user can normally access the database during scale-out or scale-in of the distributed database cluster, thereby ensuring availability of a user service.

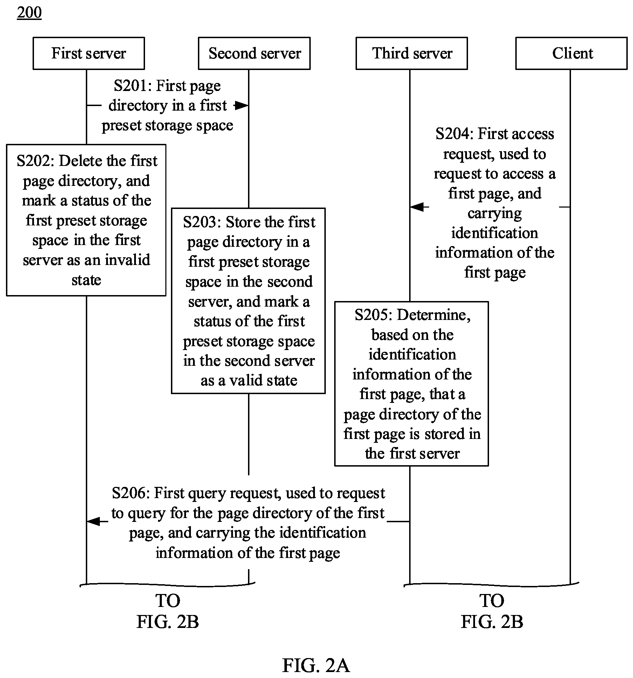

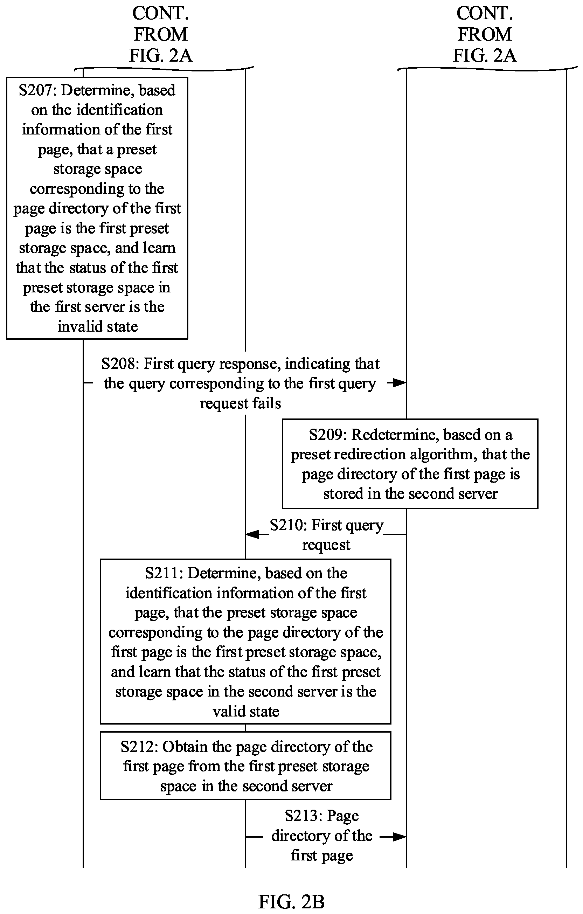

FIG. 2A and FIG. 2B are a schematic flowchart of a method 200 for implementing page access according to an embodiment of this application. The method 200 is applied to a distributed database cluster in the shared disk architecture shown in FIG. 1.

The method 200 includes the following steps.

S201: A first server sends a first page directory in a first preset storage space to a second server. Correspondingly, the second server receives the first page directory.

S202: The first server deletes the first page directory, and marks a status of the first preset storage space in the first server as an invalid state.

S203: The second server stores the first page directory in a first preset storage space in the second server, and marks a status of the first preset storage space in the second server as a valid state.

It should be noted that each server in the distributed database cluster provided in this embodiment of this application includes a plurality of preset storage spaces of a same quantity, and the plurality of preset storage spaces are used to store page directories. In the distributed database cluster, each of the plurality of preset storage spaces is in a valid state in only one server. It should be understood that, if a preset storage space in a server is in a valid state, it means that the preset storage space is available in the server, and the preset storage space needs to store or has stored a page directory of a specified page. "Need to store" means that when the server receives a query request for a page directory of a page, if a preset storage space that corresponds to the page and that is in the server is in a valid state, but a page directory of the target page is not currently stored, the server needs to create the page directory of the target page and then store the page directory of the target page in the preset storage space. "Specified page" refers to a page whose page directory needs to be stored in the preset storage space according to a preset storage rule.

When the server is added to and/or deleted from the distributed database cluster, the first page directory that is in the first preset storage space and that is sent by the first server is correspondingly stored by the second server in the first preset storage space in the second server. After migration of the first page directory from the first preset storage space in the first server to the first preset storage space in the second server is completed, the first preset storage space is marked as being in an invalid state in the first server, and is marked as being in a valid state in the second server.

It should be understood that the first page directory needs to be migrated from the first server to the second server because when the server is added to and/or deleted from the distributed database cluster, a page directory stored in an original server in the cluster needs to be reallocated to servers obtained after the server is added to and/or deleted from the cluster. In the reallocation in this embodiment of this application, all page directories in a single preset storage space are used as a minimum reallocation unit, and load balancing calculation is performed, based on a preset load balancing algorithm, on the servers obtained after the server is added to and/or deleted from the distributed database cluster. A calculation result shows that the first preset storage space needs to be valid in the second server, in other words, the first page directory needs to be stored in the first preset storage space in the second server. Therefore, the first page directory in the first preset storage space in the first server is migrated to the first preset storage space in the second server.

It should be further understood that the first page directory refers to all page directories in the first preset storage space, and the first preset storage space may store a page directory of at least one page. The at least one page in this embodiment of this application includes a first page.

S204: A third server receives a first page access request from a client, where the first page access request is used to request to access the first page, and carries identification information of the first page.

S205: The third server determines, based on the identification information of the first page, that a page directory of the first page is stored in the first server.

S206: The third server sends a first query request to the first server, where the first query request is used to query for the page directory of the first page, and carries the identification information of the first page. Correspondingly, the first server receives the first query request.

It should be understood that, whether a server is added to and/or deleted from the distributed database cluster is notified by a server that provides a cluster management function in the cluster, and servers in the cluster receive the notification in sequence. Therefore, there is a possible scenario in which when the first server has completed migration of the first page directory in the first preset storage space, the third server still does not receive the server addition and/or deletion notification from the distributed database cluster. If the third server receives the first page access request from the client in this case, when determining a server corresponding to the page directory of the first page that is requested to access by using the first page access request, the third server can still perform determining only based on a correspondence between the identification information of the first page and an original server in the cluster, to determine that the page directory of the first page is stored in the first server, and therefore sends the first query request to the first server.

S207: The first server determines, based on the identification information of the first page, that a preset storage space corresponding to the page directory of the first page is the first preset storage space, and learns that the status of the first preset storage space in the first server is the invalid state.

S208: The first server sends a first query response to the third server, where the first query response indicates that the query corresponding to the first query request fails. Correspondingly, the third server receives the first query response.

It should be understood that the identification information of the first page is used to uniquely identify the page to be accessed by a first access request, and there is a unique correspondence between the identification information and the first preset storage space in the plurality of preset storage spaces.

After receiving the first query request from the third server, the first server determines, based on the identification information of the first page, that the page directory of the first page needs to be stored in the first preset storage space. However, in this case, the first server has performed S201 and S202, and the first preset storage space in the first server is in the invalid state. In other words, in this case, the page directory of the first page does not exist in the first preset storage space in the first server. Therefore, the first server returns the first query response to the third server, to indicate that the query corresponding to the first query request fails.

S209: The third server redetermines, based on a preset redirection algorithm, that the page directory of the first page is stored in the second server.

It should be understood that the preset redirection algorithm is triggered after the first query request fails, and is used to redetermine the server in which the page directory of the first page is located. A determining manner includes any one or more of the following: (1) The third server determines, based on a migration record carried in the first query response, that the page directory of the first page is migrated to the second server. (2) After receiving the server addition and/or deletion notification sent by the server that provides the cluster management function, the third server determines, based on a result of load balancing calculation performed on servers obtained after the server is added and/or deleted, that the page directory of the first page is stored in the second server. (3) The third server predicts, based on a preset load balancing algorithm, that the page directory of the first page is stored in the second server. The foregoing determining manners are described in detail in subsequent embodiments in different cases, and details are not described herein.

S210: The third server sends the first query request to the second server. Correspondingly, the second server receives the first query request.

S211: The second server determines, based on the identification information that is of the first page and that is carried in the first query request, that the preset storage space corresponding to the page directory of the first page is the first preset storage space, and learns that the status of the first preset storage space in the second service area is the valid state.

S212: The second server obtains the page directory of the first page from the first preset storage space in the second server.

S213: The second server sends the page directory of the first page to the third server. Correspondingly, the third server receives the page directory of the first page.

It should be understood that, after successfully redetermining, based on the preset redirection algorithm, that the page directory of the first page is stored in the second server, the third server receives the page directory of the first page from the second server. If the first access request is a read request for the first page, the third server obtains the first page from a server that is indicated by the page directory of the first page and to which the first page belongs. If the first access request is a write request for the first page, the third server requests the second server to change the home server of the first page to the third server, and after the change succeeds, the third server obtains the first page from a shared disk device, and stores an updated first page in a page buffer pool of the third server after completing a write operation on the first page.

According to the method provided in this embodiment of this application, a plurality of preset storage spaces used to store page directories are provided in each server in the distributed database cluster, and whether the storage spaces are valid in the server is distinguished by marking statuses of the preset storage spaces. When a server is added to and/or deleted from the distributed database cluster, after the first server migrates the first page directory in the first preset storage space to the first preset storage space in the second server, the first server marks the first preset storage space in the first server as being in an invalid state. Correspondingly, after receiving the first page directory, the second server marks the first preset storage space in the second server as being in a valid state. When receiving the first query request from the third server, the first server may determine, based on the marked state of the first preset storage space, that the page directory of the first page is not stored in the server, and returns a query failure response corresponding to the first query request, so that the third server redetermines, based on the preset redirection algorithm, the server in which the page directory of the first page is located. According to the method provided in this embodiment of this application, when a server is added to and/or deleted from the distributed database cluster, the page directory is redistributed by using a page directory stored in one preset storage space as a minimum migration granularity while user access permission is maintained during this period, thereby ensuring availability of a user service when the server is added to and/or deleted from the distributed database cluster.

It should be understood that the server that provides the cluster management function in the distributed database cluster may be any one of the first server, the second server, and the third server, or may be a server that is independently disposed other than the first server, the second server, and the third server. This is not limited in this application.

In an optional embodiment, if the server that provides the cluster management function in the distributed cluster is a cluster management server that is independently disposed, before S201, the method 200 further includes: The first server receives a first notification message from the cluster management server, where the first notification message is used to notify the distributed database cluster to add a server and/or delete a server, the first notification message includes identification information of a plurality of first target servers, and the plurality of first target servers include the second server. The first server determines, based on the identification information of the plurality of first target servers, to migrate the first page directory from the first preset storage space in the first server to the second server.

It should be understood that, if the server that provides the cluster management function in the distributed cluster is the cluster management server that is independently disposed, the first server learns, only after receiving the first notification message from the cluster management server, that the distributed database cluster needs to add a server and/or delete a server.

It should be further understood that the first notification message sent by the cluster management server is a broadcast message in the current cluster, and time at which each server in the cluster receives the first notification message may be different. The first notification message may be sent based on an operation of cluster management personnel, or may be sent by the cluster management server after the cluster management server performs determining based on a current load status of a server in the cluster. This is not limited in this application.

In this embodiment of this application, the cluster management server that is independently disposed provides the cluster management function, and the cluster management function is separated from a service bearer function. This helps reduce computing power consumption of a server handling client service access, and helps maintain stability of performance of the distributed database cluster.

In an optional embodiment, a possible implementation in which "the first server determines, based on the identification information of the plurality of first target servers, to migrate the first page directory from the first preset storage space in the first server to the second server" includes: The first server performs calculation on identification information of each of the plurality of first target servers by using a consistent hash algorithm, to obtain a hash value of each first server, and maps hash values of the plurality of first target servers to a consistent hash ring, to obtain corresponding positions of the hash values of the plurality of first target servers on the consistent hash ring. The first server obtains a hash value of each of the plurality of preset storage spaces, and maps hash values of the plurality of preset storage spaces to the consistent hash ring, to obtain corresponding positions of the hash values of the plurality of preset storage spaces on the consistent hash ring. The first server determines, based on the corresponding positions of the hash values of the plurality of first target servers on the consistent hash ring and the corresponding positions of the hash values of the plurality of preset storage spaces on the consistent hash ring, to migrate the first page directory from the first preset storage space in the first server to the second server, where the plurality of preset storage spaces include the first preset storage space.

It should be understood that the plurality of first target servers are the servers in the distributed database cluster after the server is added to and/or deleted from the distributed database cluster. The identification information of the plurality of first target servers is used to uniquely identify each server, and may be device code, an internet protocol (internet protocol, IP) address, or a protocol port number of each server, or a unique number of each server in the cluster. This is not limited in this application.

The first server allocates, by using the consistent hash algorithm as the preset load balancing algorithm, a server in which each of the plurality of preset storage spaces needs to be in a valid state. It should be further understood that the preset storage space is provided to store a page directory. Therefore, allocation of the plurality of preset storage spaces is allocation of page directories stored in the plurality of preset storage spaces.

In a possible implementation, each of the plurality of preset storage spaces is identified by using the unique hash value of the preset storage space, and the hash values of the plurality of preset storage spaces are all unsigned integers within a range of [0, N]. A specific value of N is not limited in this application. The first server may organize a hash value space of [0, M] into a virtual consistent hash ring by using the consistent hash algorithm. Hash values from 0 to M are distributed on the consistent hash ring in a clockwise direction, where M is an unsigned integer greater than or equal to N. A value of M is not limited in this application either. The first server performs calculation on identification information of each of the plurality of first target servers by using the consistent hash algorithm, to obtain a hash value of each first target server. It should be understood that the hash value of each first target server obtained by using the consistent hash algorithm should be within a range of [0, M]. Therefore, hash values of the plurality of first target servers each uniquely correspond to one position on the consistent hash ring. Similarly, the hash value of each of the plurality of preset storage spaces also uniquely corresponds to one position on the consistent hash ring.

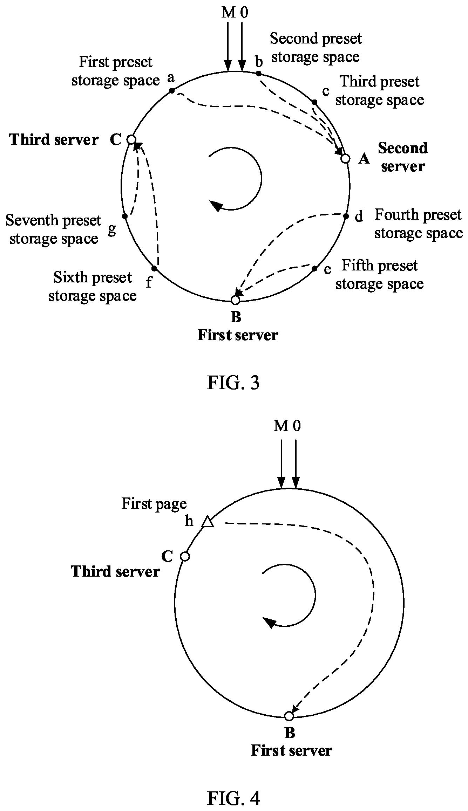

For example, the plurality of first target servers include the first server, the second server, and the third server, and the plurality of preset storage spaces include the first preset storage space, a second preset storage space, a third preset storage space, a fourth preset storage space, a fifth preset storage space, a sixth preset storage space, and a seventh preset storage space. FIG. 3 illustrates corresponding positions of hash values of servers and hash values of preset storage spaces on a consistent hash ring. As shown in FIG. 3, A, B, and C in the figure respectively correspond to positions of hash values of the second server, the first server, and the third server on the consistent hash ring, and a, b, c, d, e, f, and g respectively correspond to positions of hash values of the first preset storage space, the second preset storage space, the third preset storage space, the fourth preset storage space, the fifth preset storage space, the sixth preset storage space, and the seventh preset storage space on the consistent hash ring.

A possible implementation in which the first server determines, based on the corresponding positions of the hash values of the plurality of first target servers on the consistent hash ring and the corresponding positions of the hash values of the plurality of preset storage spaces on the consistent hash ring, the server in which each of the plurality of preset storage spaces needs to be in the valid state is as follows: On the consistent hash ring shown in FIG. 3, starting from the position a of the hash value of the first preset storage space on the consistent hash ring, in a clockwise direction of the consistent hash ring, A is a position of a closest server, and A corresponds to a position of a hash value of the second server on the consistent hash ring. Therefore, the first preset storage space is allocated to the second server. In other words, after a server is added to and/or deleted from the cluster, the first preset storage space is in the valid state in the second server. Similarly, on the consistent hash ring, the second preset storage space and the third preset storage space that correspond to the positions b and c on an arc segment CA may be allocated to the second server, the fourth preset storage space and the fifth preset storage space that correspond to the positions d and e on an arc segment AB may be allocated to the first server, and the sixth preset storage space and the seventh preset storage space that correspond to the positions f and g on an arc segment BC may be allocated to the third server.

Optionally, a counterclockwise direction may be used as a reference direction for allocating the plurality of preset storage spaces on the consistent hash ring. This is not specifically limited in this application.

It should be understood that, that the first server determines, based on the corresponding positions of the hash values of the plurality of first target servers on the consistent hash ring and the corresponding positions of the hash values of the plurality of preset storage spaces on the consistent hash ring, to allocate the first preset storage space to the second server means that after the server is added to and/or deleted from the distributed database cluster, the first preset storage space needs to be in the valid state in the second server. The first server determines, based on the first notification message, that the first preset storage space that is currently valid in the first server needs to be valid in the second server after the server is added to and/or deleted from the cluster. Therefore, the first page directory in the first preset storage space in the first server is migrated to the second server, to reallocate a server corresponding to the first page directory.

Optionally, the first preset storage space is currently in the valid state in the first server. The valid state may be a state obtained after a server is added to and/or deleted from the distributed database cluster last time, or may be a state obtained after the cluster is initialized. This is not limited in this application. However, regardless of how the valid state of the first preset storage space in the first server is obtained, when the cluster is started up, each server initializes the plurality of preset storage spaces, to determine initial statuses of the plurality of preset storage spaces in each server, so that each server is initially in a load balancing state.

In an optional embodiment, before S201, the first server initializes the plurality of preset storage spaces, and the method further includes: The first server determines identification information of a plurality of second target servers, where the plurality of second target servers include the first server. The first server marks, based on the identification information of the plurality of second target servers, initial statuses of all or a part of preset storage spaces in the plurality of preset storage spaces in the first server as valid states.

In a possible implementation, if the first server provides the cluster management function, the first server obtains the identification information of the plurality of second target servers from a module that is in internal functional modules and that is responsible for the cluster management function. All or a part of preset storage spaces that are in the plurality of preset storage spaces in the first server and that are determined based on the identification information of the plurality of second target servers by using the consistent hash algorithm need to be in valid states, and the all or part of preset storage spaces are marked as being in the valid states.

Optionally, if the case of adding and/or deleting the server that corresponds to the method 200 is that the server is added to and/or deleted from the cluster the first time after the distributed database cluster is initialized, the all or part of preset storage spaces include the first preset storage space.

In another possible implementation, the distributed database cluster includes a cluster management server dedicated to cluster management. In this case, the first server may obtain, by using a notification message of the cluster management server, the identification information of the plurality of second target servers initially included in the cluster. Specific steps include: The first server receives a second notification message from the cluster management server, where the second notification message is used to notify the distributed database cluster to perform initialization, and the second notification message includes the identification information of the plurality of second target servers. The first server determines the identification information of the plurality of second target servers based on the second notification message.

In an optional embodiment, when the distributed database cluster is started up, the method for determining the initial statuses of the plurality of preset storage spaces by the first server includes: The first server performs calculation on identification information of each of the plurality of second target servers by using the consistent hash algorithm, to obtain a hash value of each second target server, and maps hash values of the plurality of second target servers to the consistent hash ring, to obtain corresponding positions of the hash values of the plurality of second target servers on the consistent hash ring. The first server obtains the hash value of each of the plurality of preset storage spaces, and maps the hash values of the plurality of preset storage spaces to the consistent hash ring, to obtain the corresponding positions of the hash values of the plurality of preset storage spaces on the consistent hash ring. The first server determines the initial statuses of the plurality of preset storage spaces based on the corresponding positions of the hash values of the plurality of second target servers on the consistent hash ring and the corresponding positions of the hash values of the plurality of preset storage spaces on the consistent hash ring.

It should be understood that, when the distributed database cluster is started up, the statuses of the plurality of preset storage spaces in the servers are all invalid states. After obtaining the identification information of the plurality of second target servers initially included in the cluster, the servers obtain a hash value of each second target server, maps hash values of the plurality of second target servers to the consistent hash ring shown in FIG. 3, to obtain corresponding positions of the hash values of the plurality of second target servers on the consistent hash ring, and allocates the plurality of preset storage spaces to the plurality of second target servers based on the corresponding positions of the hash values of the plurality of second target servers on the consistent hash ring and the corresponding positions of the hash values of the plurality of preset storage spaces on the consistent hash ring. After obtaining an initial allocation result of the plurality of preset storage spaces based on the identification information of the plurality of second target servers, the first server marks a preset storage space allocated to the first server as being in a valid state.

In this embodiment of this application, the plurality of preset storage spaces are allocated when the distributed database cluster is started up, and each server marks, based on an obtained allocation result, a preset storage space allocated to the server as being in a valid state. In this way, during use of the distributed database, a page directory specified for a server for storage may be correspondingly stored in a preset storage space in a valid state in the server. This helps maintain a load balancing state of servers in the cluster.

In an optional embodiment, a possible implementation of S205 includes: The third server performs calculation on the identification information of the first page by using the consistent hash algorithm, to obtain a hash value of the first page, and maps the hash value of the first page to the consistent hash ring, to obtain a position of the hash value of the first page on the consistent hash ring. The third server determines, based on the position of the hash value of the first page on the consistent hash ring and the corresponding positions of the hash values of the plurality of second target servers on the consistent hash ring, that the page directory of the first page is stored in the first server.

It should be understood that S205 is performed when the third server has not received the first notification message sent by the cluster management server. In a possible implementation, a case of adding and/or deleting the server from the distributed database cluster described in the method 200 is that the server is added to and/or deleted from the cluster the first time after the distributed database cluster is initialized. In this case, when determining the server corresponding to the page directory of the first page, the third server refers to positions of the plurality of second target servers on the consistent hash ring during initialization of the third server.

For example, as shown in FIG. 4, the plurality of second target servers include the first server and the third server. Positions of a hash value of the first server and a hash value of the third server on the consistent hash ring are B and C respectively, and a position of the hash value of the first page on the consistent hash ring is h. Starting from the position h of the hash value of the first page, in a clockwise direction, B is a position of a closest server, and B corresponds to the position of the hash value of the first server. Therefore, it may be determined that the page directory of the first page is stored in the first server. Therefore, the third server sends the first query request to the first server.

It should be understood that, when the page directory of the server corresponding to the first page is searched, a reference direction on the consistent hash ring needs to be consistent with a reference direction used when the page directory is stored. Optionally, the direction may be a clockwise direction or a counterclockwise direction. This is not limited in this application.

In an optional embodiment, a possible implementation in which the first server determines, based on the identification information of the first page, that the preset storage space corresponding to the page directory of the first page is the first preset storage space in S207 includes: The first server performs calculation on the identification information of the first page by using the consistent hash algorithm, to obtain a hash value of the first page, and maps the hash value of the first page to the consistent hash ring, to obtain a position of the first page on the consistent hash ring. The first server determines, based on the position of the first page on the consistent hash ring and the corresponding positions of the hash values of the plurality of preset storage spaces on the consistent hash ring, that the first preset storage space is the preset storage space corresponding to the page directory of the first page.

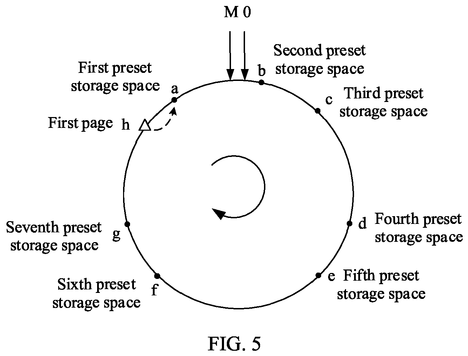

For example, the plurality of preset storage spaces include the first preset storage space, a second preset storage space, a third preset storage space, a fourth preset storage space, a fifth preset storage space, a sixth preset storage space, and a seventh preset storage space. As shown in FIG. 5, a position of the hash value of the first page on the consistent hash ring is h, and positions of hash values of the first preset storage space, the second preset storage space, the third preset storage space, the fourth preset storage space, the fifth preset storage space, the sixth preset storage space, and the seventh preset storage space on the consistent hash ring respectively correspond to a, b, c, d, e, f, and g. Starting from the position h of the hash value of the first page on the consistent hash ring, the position a of the first closest preset storage space in a clockwise direction is the first preset storage space in which the page directory of the first page is located.

It should be understood that, for the first page, the page directory of the first page is stored according to the rule shown in FIG. 5 during creation. For the page directory that is of the first page and that is stored in the first preset storage space, a home server that is of the first page and that is included in the page directory may change based on a property (a read request/write request) of a page access request, but the page directory of the first page is always stored in the first preset storage space. If the first preset storage space is in a valid state in a server, the page directory of the first page is stored in a first preset storage space in the server.

After performing S201 and S202, when receiving the first query request, the first server may determine, based on the identification information of the first page carried in the first query request, that the first preset storage space is the preset storage space corresponding to the page directory of the first page. However, in this case, the first preset storage space in the first server is in an invalid state. Therefore, the first server returns a query failure response to the third server after the query.

After the third server receives the first query response that is from the first server and that indicates that the query corresponding to the first query request fails, S209 may be implemented in the following three manners:
(1) The third server determines, based on the migration record carried in the first query response, that the page directory of the first page is migrated to the second server. After performing S201, the first server records the identification information of the second server in the first preset storage space in the first server, and after receiving the first query request and learning that the status of the first preset storage space in the first server is the invalid state, obtains the identification information that is of the second server and that is recorded in the first preset storage space in the first server, and returns the identification information of the second server to the third server by carrying the identification information of the second server in the first query response. In this way, the third server may continue to send the first query request to the second server based on the identification information of the second server.
(2) After receiving the server addition and/or deletion notification sent by the server that provides the cluster management function, the third server determines, based on the result of load balancing calculation performed on the servers obtained after the server is added and/or deleted, that the page directory of the first page is stored in the second server. The third server receives the second notification message, where the second notification message includes the identification information of the plurality of first target servers, and the plurality of first target servers include the second server. After receiving the second notification message, the third server determines the positions of the hash values of the plurality of first target servers on the consistent hash ring based on the identification information of the plurality of first target servers, and then redetermines, based on the position of the hash value of the first page on the consistent hash ring, that the page directory of the first page is stored in the second server.
(3) The third server predicts, based on the preset load balancing algorithm, that the page directory of the first page is stored in the second server. In a possible implementation, according to a rule of the consistent hash algorithm, if the first server is a server that needs to be deleted from the current cluster, after the first server is deleted, the currently valid first preset storage space in the first server is allocated to a next server after the first server in the clockwise direction of the consistent hash ring. If a server needs to be added to the current cluster, and a position of the added server is a position that is before and adjacent to the first server in the clockwise direction of the consistent hash ring, a part of currently valid preset storage spaces in the first server need to be allocated to the added server. If the next server in the server deletion scenario or the added server in the server addition scenario is the second server, the third server may predict, based on relative positions of the server and the first server on the consistent hash ring, a server (an adjacent server before or after the first server in the clockwise direction of the consistent hash ring) corresponding to the page directory of the first page.

It should be understood that, in the method 200, a reason why the third server fails to obtain the page directory of the first page from the first server is that the third server considers, based on a load balancing state currently known to the third server, that the page directory of the first page needs to be stored in the first preset storage space in the first server. However, actually, because a quantity of servers in the cluster has changed, page directories in the servers are being reallocated, and the page directory of the first page has been migrated out of the first preset storage space in the first server. In this case, the third server may redetermine, based on the foregoing manner (1), manner (2), or manner (3), the server that corresponds to the first page and that actually stores the page directory of the first page.

In this embodiment of this application, program code for implementing the foregoing manner (1), manner (2), and manner (3) is set. During specific implementation, the third server may randomly select any manner or attempt the manners one by one, until redirection succeeds, that is, a server in which the valid first preset storage space is located is found.

In an optional embodiment, the first page directory is stored in the first preset storage space in the second server in a form of doubly linked list, and a possible manner in which the second server implements S212 includes: The second server searches the doubly linked list in a traversal manner based on the identification information of the first page, until a target node on which the page directory of the first page is stored in the doubly linked list is found, and obtains the page directory of the first page from the target node.

It should be understood that the doubly linked list is a data storage structure. When a data volume of the distributed database is less than a preset threshold, the page directory may be stored in a plurality of preset storage spaces in the form of doubly linked list. During searching, a page directory corresponding to an identifier of a target page is found by traversing the doubly linked list in the preset storage spaces.

In this embodiment of this application, in a manner of storing the page directory in the form of doubly linked list, search efficiency is high when the data volume of the distributed database is less than the preset threshold.

In an optional embodiment, the first page directory is stored in the second server in a form of hash table, and another possible manner in which the second server implements S212 includes: The second server performs calculation on the identification information of the first page by using the consistent hash algorithm, to obtain the hash value of the first page. The second server finds, in the hash table, a target array corresponding to the hash value of the first page, and obtains the page directory of the first page from the target array.

It should be understood that, when the first page directory is stored in the second server in the form of hash table, the target array corresponding to the hash value of the first page may be quickly found by performing hash search by using the hash value of the first page, and then the page directory of the first page is obtained from the target array. In this manner, when the data volume of the distributed database is greater than the preset threshold, a search range can be quickly narrowed down to the target array, thereby improving search efficiency.

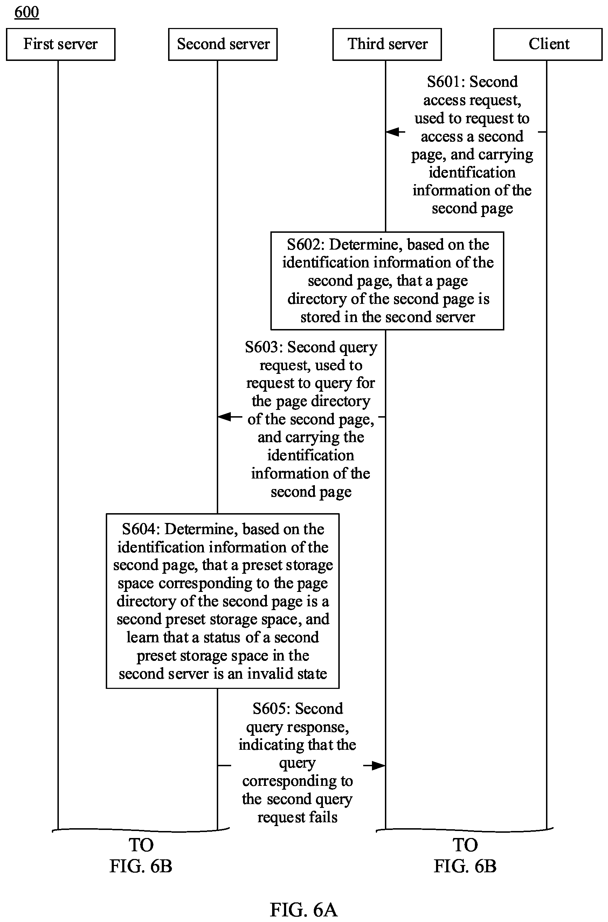

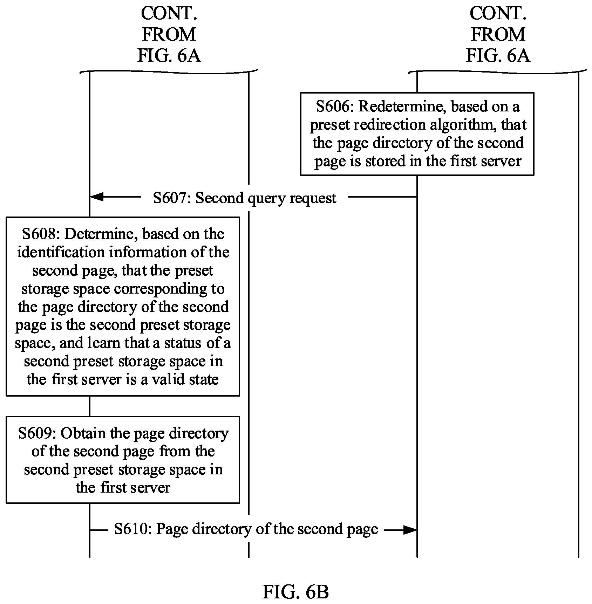

FIG. 6A and FIG. 6B are a schematic flowchart of a method 600 for implementing page access according to an embodiment of this application. The method 600 may be implemented after the method 200, or may be separately implemented. This is not limited in this application.

The method 600 specifically includes the following steps.

S601: A third server receives a second access request from a client, where the second access request is used to request to access a second page, and carries identification information of the second page.

S602: The third server determines, based on the identification information of the second page, that a page directory of the second page is stored in a second server.

S603: The third server sends a second query request to the second server, where the second query request is used to query for the page directory of the second page, and carries the identification information of the second page. Correspondingly, the second server receives the second query request.

S604: The second server determines, based on the identification information of the second page, that a preset storage space corresponding to the page directory of the second page is the second preset storage space, and learns that a status of the second preset storage space is an invalid state.

S605: The second server sends a second query response to the third server, where the second query response indicates that the query corresponding to the second query request fails. Correspondingly, the third server receives the second query response.

S606: The third server redetermines, based on a preset redirection algorithm, that the page directory of the second page is stored in a first server.

S607: The third server sends the second query request to the first server. Correspondingly, the first server receives the first query request.

S608: The first server determines, based on the identification information of the second page, that the preset storage space corresponding to the page directory of the second page is the second preset storage space, and learns that a status of the second preset storage space in the first server is a valid state.

S609: The first server obtains the page directory of the second page from the second preset storage space.

S610: The first server sends the page directory of the second page to the third server.

An implementation scenario of the method 600 is as follows: A cluster management server has broadcast a first notification message, the first notification message is used to notify a distributed database cluster to add and/or delete a server, and both the first server and the third server have received the notification. After the server is added to and/or deleted from the distributed database cluster, it is obtained by using a consistent hash algorithm based on identification information that is of a plurality of first target servers and that is included in the notification, that the second preset storage space needs to be in a valid state in the second server. However, migration of the page directory needs time, when receiving the second query request from the third server, the second server has not received the page directory from the second preset storage space in the first server. Therefore, when the second server receives the second query request, the second preset storage space in the second server is temporarily in an invalid state, and therefore, the second server returns a query failure response to the third server.

A possible implementation of S604 includes: The third server determines, based on positions of hash values of a plurality of second target servers on a consistent hash ring that are included during cluster initialization and a position of a hash value of the second page on the consistent hash ring, that before the third server receives the first notification message, a server in which the page directory of the second page is located is the first server, and the third server sends the second query request to the first server, and receives the page directory of the second page found by the first server in the second preset storage space.

A method for determining, based on the identification information of the second page, the server in which the page directory of the second page is located in S602 is similar to a method for determining, based on the identification information of the first page, the server in which the page directory of the first page is located. A method for determining, based on the identification information of the second page, the preset storage space corresponding to the page directory of the second page in S604 and S608 is similar to the method for determining, based on the identification information of the first page, the preset storage space corresponding to the page directory of the first page. Details are not described herein again.

According to the method provided in this embodiment of this application, when a server is added to and/or deleted from the distributed database cluster, because the page directory in the second preset storage space needs to be migrated from the first server to the second server but has not been migrated to the second server, the third server fails to send the second query request to the second server, and may redetermine, based on a preset redirection method, that the page directory of the second page is stored in the first server. This helps improve efficiency of obtaining the second page directory and reduce a probability that a second page access request fails, and helps ensure availability of a user service.

Optionally, the "plurality of preset storage spaces" described in the foregoing embodiment may be a bucket array or any other data structure that can implement a function described in this application. A specific structure of the plurality of preset storage spaces is not limited in this application.

The following describes in detail, by using an example in which a plurality of preset storage spaces are a bucket array, a method for implementing page access described in embodiments of this application.

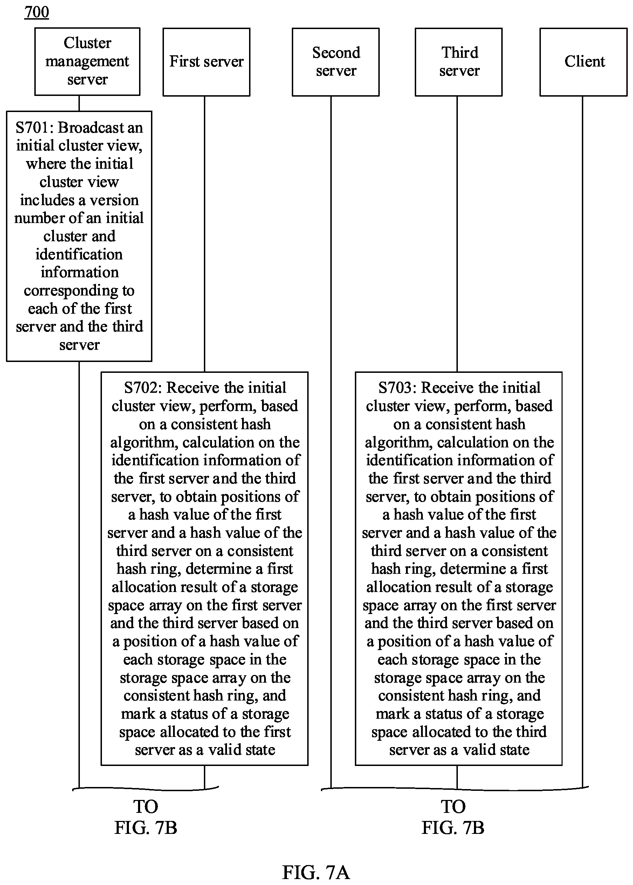

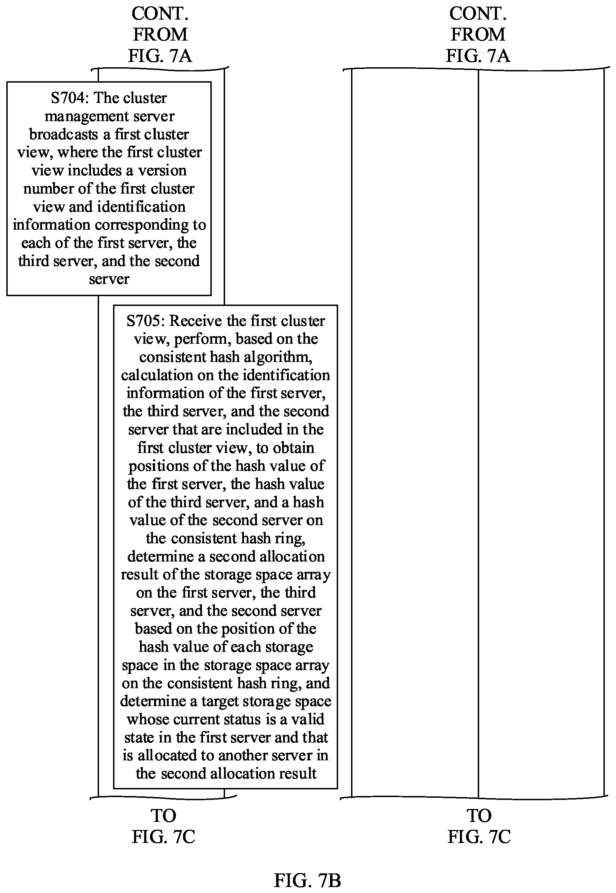

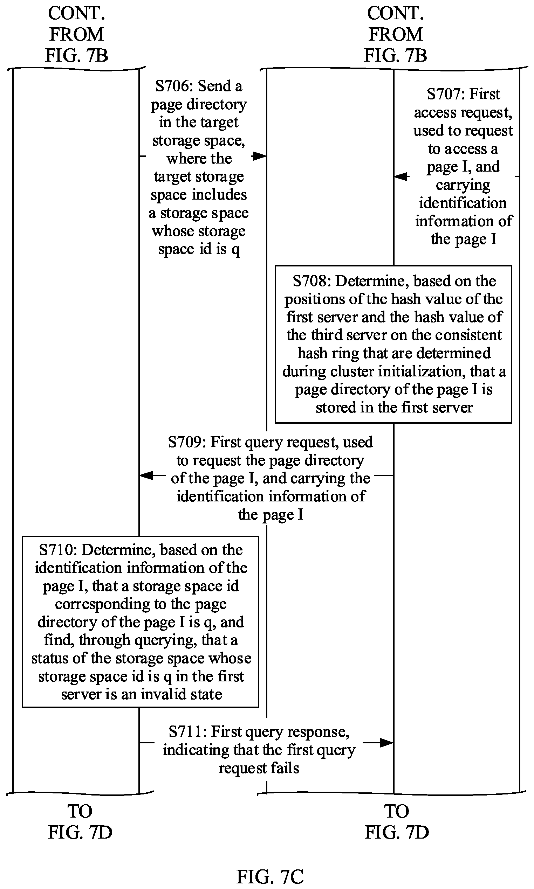

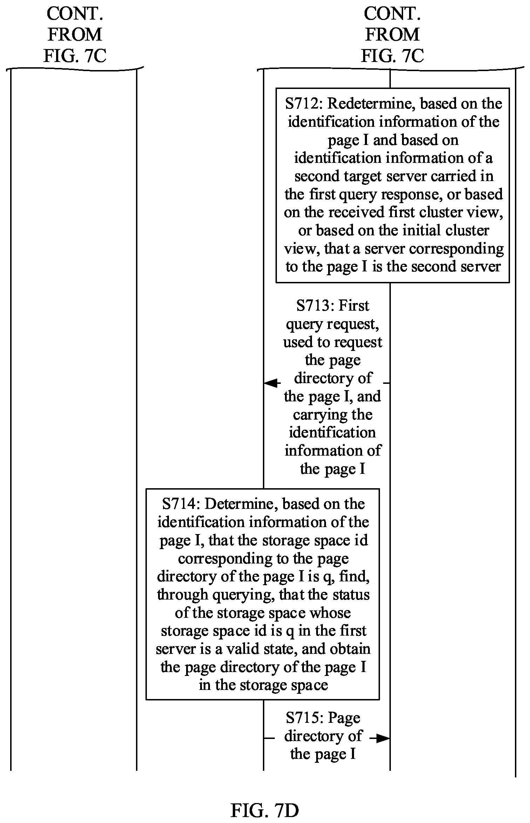

FIG. 7A to FIG. 7D are a schematic flowchart of a method 700 for implementing page access according to an embodiment of this application. The method 700 is applied to a scenario in which a quantity of servers that handle client service access in a distributed database cluster increases from two to three, and an independent cluster management server is disposed in the cluster. Two servers for handling client service access are initially disposed in the distributed database cluster. When the cluster is started up, the cluster management server broadcasts an initial cluster view in the initial cluster. For example, the initial cluster includes a first server and a third server.

It should be understood that the bucket array provided in this embodiment of this application is included in each server in the distributed database cluster, and is program code in a page buffer pool included in a database instance of the server. During running, the program code is run in a server host memory and/or a graphics processing unit (graphics processing unit, GPU) memory.

In a possible implementation, a valid state and an invalid state of each bucket in the bucket array may be respectively marked as valid and invalid. A usage lock (usage lock) may be set for each bucket in the bucket array. When a page directory stored in the bucket is migrated, an exclusive lock (usage lock exclusive) is added, to prevent a request from accessing the bucket at this time. When the bucket is accessed, a shared lock (usage lock share) is added to identify a use status of the bucket. In this case, the bucket may be accessed by a plurality of requests at the same time. A specific hash value may be calculated for each bucket in the bucket array by using a hash function hash (key), and the hash value of each bucket is used as identification information of the bucket, and is denoted as a bucket id, where the key may be unique code of each bucket in the bucket array. Each bucket in the bucket array includes a doubly linked list of a preset length, and each node in the doubly linked list may store a page directory of one page.

The method 700 specifically includes the following steps.

S701: The cluster management server broadcasts the initial cluster view, where the initial cluster view includes a version number of the initial cluster and identification information of the first server and the third server.

Optionally, the version number of the initial cluster in the initial cluster view may be 100, identification information corresponding to each server included in the initial cluster may be a unique number of the server in the cluster, a number of the first server is 0, and a number of the third server is 1. However, this is not limited in this application.

S702: The first server receives the initial cluster view, performs, based on a consistent hash algorithm, calculation on the identification information of the first server and the third server that are included in the initial cluster view, to obtain positions of a hash value of the first server and a hash value of the third server on a consistent hash ring, determines a first allocation result of the bucket array on the first server and the third server based on a position of a hash value of each bucket in the bucket array on the consistent hash ring, and marks a status of a bucket allocated to the first server as a valid state.

In a possible implementation, the storage space (bucket) array includes a plurality of buckets whose bucket ids are 0 to m, where m is an unsigned integer. The first allocation result is allocating buckets whose bucket ids are 0 to k in the bucket array to the first server, and allocating buckets whose bucket ids are k+1 to m to the third server, where 0<k<m, and k is also an unsigned integer.

Optionally, the plurality of buckets whose bucket ids are 0 to m may be m buckets whose bucket ids are consecutive, or may be a plurality of buckets whose bucket ids are within a range of 0 to m but whose quantity of buckets is less than m. This is not limited in this application. In this embodiment of this application, an example in which the bucket array includes m buckets whose bucket ids are 0 to m is used for description.

A specific implementation process of S702 includes: The first server determines, one by one starting from a bucket whose bucket id is 0, whether the current bucket is allocated to the first server in the first allocation result. If yes, the first server marks a status of the bucket as valid. If no, the first server skips the bucket and continues to determine a next bucket, until each bucket in the bucket array is traversed.

S703: The third server receives the initial cluster view, performs, based on a consistent hash algorithm, calculation on the identification information of the first server and the third server that are included in the initial cluster view, to obtain positions of a hash value of the first server and a hash value of the third server on a consistent hash ring, determines a first allocation result of the bucket array on the first server and the third server based on a position of a hash value of each bucket in the bucket array on the consistent hash ring, and marks a status of a bucket allocated to the third server as a valid state.

It should be understood that logic of performing S703 by the third server is the same as logic of performing S702 by the first server. Details are not described again.

In this case, the cluster initialization is completed. Then, the cluster management server determines, based on load statuses of the first server and a second server, that a server, for example, the second server, needs to be added to the current cluster. Therefore, a first cluster view is broadcast in a cluster including the second server.

S704: The cluster management server broadcasts the first cluster view, where the first cluster view includes a version number of the first cluster view and identification information corresponding to each of the first server, the third server, and the second server.

Optionally, the version number of the first cluster view may be 101, and identification information corresponding to servers included in the cluster may be a number 0 of the first server, a number 1 of the third server, and a number 2 of the second server.

It should be understood that, a purpose of including, by the cluster management server, a cluster view version number in a cluster view broadcast each time is to prevent a server from receiving migration information corresponding to a cluster view version earlier than a locally stored cluster view version, and also avoid a case in which when a next scaling is started before one scaling in the cluster is not completely ended, cluster view versions of some servers that have completed the latest scaling are rolled back.

S705: The first server receives the first cluster view, and performs, based on the consistent hash algorithm, calculation on the identification information of the first server, the third server, and the second server that are included in the first cluster view, to obtain positions of the hash value of the first server, the hash value of the third server, and a hash value of the second server on the consistent hash ring, determines a second allocation result of the bucket array on the first server, the third server, and the second server based on the position of the hash value of each bucket in the bucket array on the consistent hash ring, and determines a target bucket whose current status is a valid state in the first server and that is allocated to another server in the second allocation result.

For example, the another server may be the second server.

S706: The first server sends a page directory in the target bucket to the second server, where the target bucket includes a bucket whose bucket id is q. Correspondingly, the second server receives the page directory.

A specific implementation process of S705 and S706 includes: The first server determines, one by one starting from the bucket whose bucket id is 0, whether a status of the current bucket is valid and whether the current bucket is allocated to the second server in the second allocation result. If yes, the first server obtains a usage lock exclusive lock of the current bucket, sends a page directory in the current bucket to the second server, and marks the status of the bucket as invalid and releases the usage lock to an idle state after receiving a lock release request of the second server. If no, the first server skips the bucket and continues to determine a next bucket, until each bucket in the bucket array is traversed. After receiving the page directory, the second server obtains the usage lock exclusive of the corresponding bucket in the first server, fills the received page directory in the bucket, marks the status of the bucket as valid, and releases the usage lock to the idle state.

It should be noted that, when the usage lock exclusive lock is added to the bucket, an access request for the bucket is temporarily blocked by the usage lock exclusive lock until the usage lock is released to the idle state. The access request can be used to obtain whether the status of the bucket is valid or invalid, thereby avoiding a case in which the access request for the bucket continuously reports an error because no valid data can be accessed during bucket migration, and reducing signaling overheads between servers.

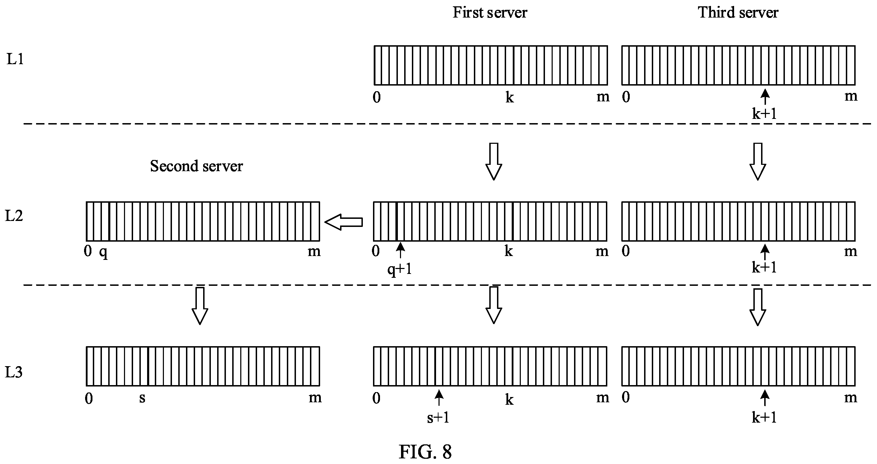

FIG. 8 is a diagram of a page directory migration process from a perspective of a cluster. As shown in FIG. 8, an L1 row represents the first allocation result of a plurality of buckets in a bucket array in the first server and the third server, where buckets whose bucket ids are 0 to k in a shadow part of a bucket array corresponding to the first server represent buckets allocated to the first server, and buckets whose bucket ids are k+1 to m in a shadow part corresponding to the third server represent buckets allocated to the third server; an L2 row represents buckets that traverse the local with the first server in a migration process in S706 and S707, where page directories in buckets whose bucket ids are 0 to q have been migrated to the added second server, and bucket allocation results of the third server in the first allocation result and the second allocation result do not change; and an L3 row represents that page directories that are in buckets whose bucket ids are 0 to s and that need to be migrated from the first server to the second server have been migrated, and a load balancing state corresponding to the second allocation result has been reached. 0<q<s<k<m, and 0, q, s, k, and m are all unsigned integers.

In this embodiment of this application, access permission of a client on the server is always granted. In a possible scenario, in a process in which the first server migrates a page directory in a corresponding bucket based on the second allocation result (when a state shown by L2 in FIG. 8 is reached), the third server receives a page access request from the client.

S707: The third server receives a first access request from the client, where the first access request is used to request to access a page I, and carries identification information of the page I.

S708: The third server determines, based on the positions of the hash value of the first server and the hash value of the third server on the consistent hash ring that are determined during cluster initialization, that a page directory of the page I is stored in the first server.

S709: The third server sends a first query request to the first server, where the first query request is used to request the page directory of the page I, and carries the identification information of the page I. Correspondingly, the first server receives the first query request.

S710: The first server determines, based on the identification information of the page I, that a bucket id corresponding to the page directory of the page I is q, and finds that a status of the bucket whose bucket id is q in the first server is an invalid state (invalid).

S711: The first server sends a first query response to the third server, where the first query response indicates that the first query request fails. Correspondingly, the third server receives the first query response.

Optionally, the first query response carries identification information of a second target server.

S712: The third server redetermines, based on the identification information of the page I and based on the identification information of the second target server carried in the first query response, or based on the received first cluster view, or based on the initial cluster view, that a server corresponding to the page I is the second server.

It should be understood that a reason why the third server cannot correctly determine the server corresponding to the page directory of the page I is that the third server and another server receive the broadcast notification of the cluster management server at different moments. Therefore, provided that the third server synchronizes information with the server to be accessed by the third server, that is, obtained cluster views are consistent, the third server can always determine, based on the cluster view, the server in which the page directory of the page I is located.

S713: The third server sends a first query request to the second server, where the first query request is used to request the page directory of the page I, and carries the identification information of the page I. Correspondingly, the second server receives the first query request.

S714: The second server determines, based on the identification information of the page I, that a bucket id corresponding to the page directory of the page I is q, finds that a status of a bucket whose bucket id is q in the first server is a valid state (valid), and obtains the page directory of the page I in the bucket.

S715: The second server sends the page directory of the page I to the third server. Correspondingly, the third server receives the page directory of the page I.

In a possible implementation, the bucket whose bucket id is q in the second server stores, in a form of doubly linked list, a page directory including the page I, and the second server searches the doubly linked list in the bucket in a traversal manner based on identification information of the page I, until the page directory of the page I corresponding to the identification information of the page I is found.

In another possible implementation, the bucket whose bucket id is q in the second server stores, in a form of doubly linked list, a pointer (hash entry) pointing to a position corresponding to a target page directory of a hash table, and the page directory is stored in a server in a form of hash table (key-value). When the page directory of the page I is searched for, consistent hash calculation is performed on the identification information of the page I, to obtain a target array that is in a hash table and that uniquely corresponds to a hash value of the page I, and then the page directory of the page I is searched for in the target array based on the identification information of the page I. The hash entry stored in the doubly linked list may be used to obtain all page directories corresponding to the entire bucket one by one from the hash table when the bucket is migrated. In addition, the page directory is stored in the hash table, so that a bucket capacity is not occupied to store the page directory, and a storage capacity of the page directory does not reach an upper limit of the bucket capacity due to a bucket capacity limitation. This helps improve flexibility of the distributed database cluster.

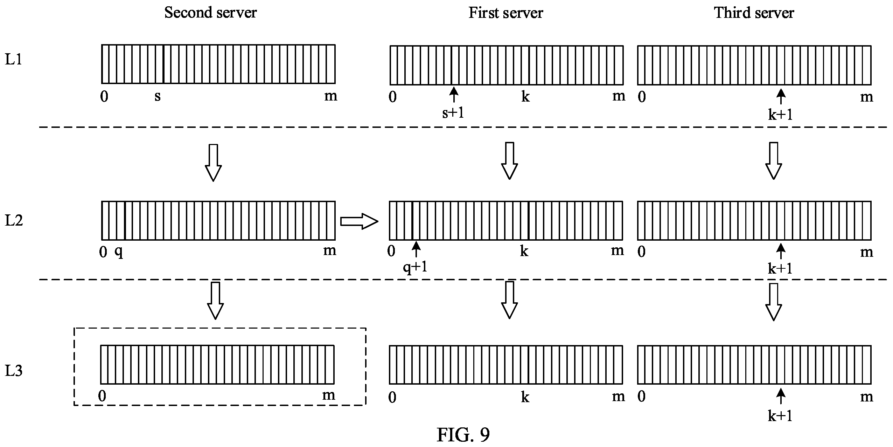

In a possible scenario, after the distributed database cluster reaches the load balancing state corresponding to L3 in FIG. 8, the cluster includes the first server, the second server, and the third server. After a period of use, the cluster management server determines, based on a load status of each server, that excessive performance is caused by using the three servers in a current service scale, and one server needs to be deleted. For example, if the second server needs to be deleted, a migration process of a page directory of the second server from the perspective of the cluster may be shown in FIG. 9. L1 in FIG. 9 represents a bucket array allocation status in each server before the second server is deleted, where buckets whose bucket ids are 0 to s are valid in the second server, buckets whose bucket ids are s+1 to k are valid in the first server, and buckets whose bucket ids are k+1 to m are valid in the third server. L2 in FIG. 9 represents a process of migrating page directories in valid buckets in the second server to the first server. L3 in FIG. 9 represents a new load balancing state of the distributed database cluster after all page directories in the second server are migrated.

Optionally, in a server deletion scenario, the cluster management server may broadcast a cluster view twice. The first time is used to indicate identification information of a server that needs to be deleted, and each server in the cluster calculates, based on identification information of remaining servers, a bucket array allocation status in the remaining servers. The second time is used to indicate identification information of a server included in the cluster after the server is deleted, to determine that the server in the current cluster has reached an expected load balancing state.

It should be understood that, when the distributed database cluster deletes the second server, the migration process of the page directory in the second server is similar to the execution process of the first server in the method 200 or 600. Details are not described again.

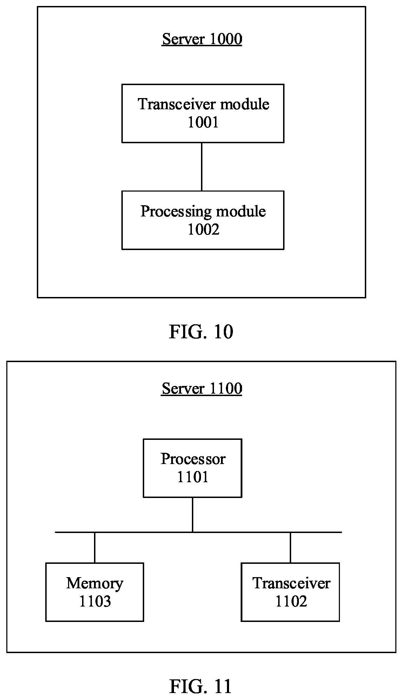

The foregoing describes in detail the page access method provided in embodiments of this application with reference to FIG. 2A and FIG. 2B to FIG. 9. The following describes in detail a server in embodiments of this application with reference to FIG. 10 and FIG. 11.

FIG. 10 is a block diagram of a server 1000 according to an embodiment of this application. As shown in FIG. 10, the server 1000 includes a transceiver module 1001 and a processing module 1002.

In a possible implementation, the server 1000 is configured to perform procedures and steps corresponding to the first server in the foregoing method embodiments.

The transceiver module 1001 is configured to send a first page directory in a first preset storage space to a second server. The processing module 1002 is configured to: delete the first page directory, and mark a status of the first preset storage space in the first server as an invalid state, where the first page directory indicates a correspondence between at least one page and a server that stores the at least one page, each server in a distributed database cluster includes a plurality of preset storage spaces of a same quantity, and each of the plurality of preset storage spaces is in a valid state in only one server. The transceiver module 1001 is further configured to receive a first query request from a third server, where the first query request is used to query for a page directory of a first page, and the first query request carries identification information of the first page. The processing module 1002 is further configured to: determine, based on the identification information of the first page, that a preset storage space corresponding to the page directory of the first page is the first preset storage space, and learn that the status of the first preset storage space in the first server is the invalid state; and send a first query response to the third server, where the query response indicates that the query corresponding to the first query request fails.

Optionally, the transceiver module 1001 is further configured to receive a first notification message from a cluster management server, where the first notification message is used to notify the distributed database cluster to add a server and/or delete a server, the first notification message includes identification information of a plurality of first target servers, and the plurality of first target servers include the second server. The processing module 1002 is further configured to determine, based on the identification information of the plurality of first target servers, to migrate the first page directory from the first preset storage space in the first server to the second server.

Optionally, the processing module 1002 is specifically configured to: perform calculation on identification information of each of the plurality of first target servers by using a consistent hash algorithm, to obtain a hash value of each first server, and map hash values of the plurality of first target servers to a consistent hash ring, to obtain corresponding positions of the hash values of the plurality of first target servers on the consistent hash ring; obtain a hash value of each of the plurality of preset storage spaces, and map hash values of the plurality of preset storage spaces to the consistent hash ring, to obtain corresponding positions of the hash values of the plurality of preset storage spaces on the consistent hash ring; and determine, based on the corresponding positions of the hash values of the plurality of first target servers on the consistent hash ring and the corresponding positions of the hash values of the plurality of preset storage spaces on the consistent hash ring, to migrate the first page directory from the first preset storage space in the first server to the second server, where the plurality of preset storage spaces include the first preset storage space.

Optionally, the processing module 1002 is further configured to: determine identification information of a plurality of second target servers, where the plurality of second target servers include the first server; and mark, based on the identification information of the plurality of second target servers, initial statuses of all or a part of preset storage spaces in the plurality of preset storage spaces in the first server as valid states, where the all or part of preset storage spaces include the first preset storage space.

Optionally, the processing module 1002 is further configured to: perform calculation on identification information of each of the plurality of second target servers by using the consistent hash algorithm, to obtain a hash value of each second target server, and map hash values of the plurality of second target servers to the consistent hash ring, to obtain corresponding positions of the hash values of the plurality of second target servers on the consistent hash ring; obtain the hash value of each of the plurality of preset storage spaces, and map the hash values of the plurality of preset storage spaces to the consistent hash ring, to obtain the corresponding positions of the hash values of the plurality of preset storage spaces on the consistent hash ring; and determine the initial statuses of the plurality of preset storage spaces based on the corresponding positions of the hash values of the plurality of second target servers on the consistent hash ring and the corresponding positions of the hash values of the plurality of preset storage spaces on the consistent hash ring.

Optionally, the transceiver module 1001 is further configured to receive a second notification message from the cluster management server, where the second notification message is used to notify the distributed database cluster to perform initialization, and the second notification message includes the identification information of the plurality of second target servers. The processing module 1002 is further specifically configured to determine the identification information of the plurality of second target servers based on the second notification message.

Optionally, the processing module 1002 is further specifically configured to: perform calculation on the identification information of the first page by using the consistent hash algorithm, to obtain a hash value of the first page, and map the hash value of the first page to the consistent hash ring, to obtain a position of the first page on the consistent hash ring; and determine, based on the position of the first page on the consistent hash ring and the corresponding positions of the hash values of the plurality of preset storage spaces on the consistent hash ring, that the first preset storage space is the preset storage space corresponding to the page directory of the first page.

Optionally, the processing module 1002 is further configured to: record identification information of the second server in the first preset storage space in the first server; and obtain the identification information that is of the second server and that is recorded in the first preset storage space in the first server. The transceiver module 1001 is further configured to send the first query response to the third server, where the query response indicates that the query corresponding to the first query request fails, and the first query response carries the identification information of the second server.

Optionally, the first page directory is stored in the first preset storage space in the first server in a form of doubly linked list, or is stored in the first server in a form of hash table.

The transceiver module 1001 is further configured to receive a second query request from the third server, where the second query request is used to query for a page directory of a second page, and the second query request carries identification information of the second page. The processing module 1002 is further configured to: determine, based on the identification information of the second page, that a preset storage space corresponding to the page directory of the second page is a second preset storage space; and when finding that a status of the second preset storage space in the first server is a valid state, obtain the page directory of the second page from the second preset storage space in the first server. The transceiver module 1001 is further configured to send the page directory of the second page to the third server.

In a possible implementation, the server 1000 is further configured to perform procedures and steps corresponding to the second server in the foregoing method embodiments.

The transceiver module 1001 is configured to: receive a first page directory, store the first page directory in a first preset storage space in the second server, and mark a status of the first preset storage space in the second server as a valid state; and receive a first query request from a third server, where the first query request is used to query for a page directory of a first page, and the first query request carries identification information of the first page. The processing module 1002 is configured to: determine, based on the identification information of the first page, that a preset storage space corresponding to the page directory of the first page is the first preset storage space, and learn that the status of the first preset storage space in the second server is the valid state; and obtain the page directory of the first page from the first preset storage space in the second server. The transceiver module 1001 is further configured to send the page directory of the first page to the third server.

Optionally, the first page directory is stored in the first preset storage space in the second server in a form of doubly linked list, and the second server obtains the page directory of the first page from the first preset storage space in the second server. The processing module 1002 is further configured to: search the doubly linked list in a traversal manner based on the identification information of the first page, until a target node on which the page directory of the first page is stored in the doubly linked list is found, and obtain the page directory of the first page from the target node.

Optionally, the first page directory is stored in the second server in a form of hash table, and the second server obtains the page directory of the first page from the first preset storage space in the second server. The processing module 1002 is further configured to: perform calculation on the identification information of the first page by using a consistent hash algorithm, to obtain a hash value of the first page; and find, in the hash table, a target array corresponding to the hash value of the first page, and obtain the page directory of the first page from the target array.

Optionally, the transceiver module 1001 is further configured to receive a second query request from the third server, where the second query request is used to query for a page directory of a second page, and the second query request carries identification information of the second page. The processing module 1002 is further configured to: determine, based on the identification information of the second page, that a preset storage space corresponding to the page directory of the second page is a second preset storage space; and when finding that a status of the second preset storage space in the second server is an invalid state, send a query response to the third server, where the query response indicates that the query fails.

In a possible implementation, the server 1000 is further configured to perform procedures and steps corresponding to the third server in the foregoing method embodiments.

The transceiver module 1001 is configured to: receive a first access request from a client, where the first access request is used to request to access a first page, and the first access request carries identification information of the first page. The processing module 1002 is configured to determine, based on the identification information of the first page, that a page directory of the first page is stored in a first server. The transceiver module 1001 is further configured to: send a first query request to the first server, where the first query request is used to query for the page directory of the first page, and the first query request carries the identification information of the first page; and receive a first query response from the first server, where the first query response indicates that the query corresponding to the first query request fails. The processing module 1002 is further configured to redetermine, based on a preset redirection algorithm, that the page directory of the first page is stored in a second server. The transceiver module 1001 is further configured to: send the first query request to the second server; and receive the page directory of the first page from the second server.

Optionally, the first query response carries identification information of the second server. The processing module 1002 is further configured to determine, based on the first query response, that the first page directory is stored in the second server.

Optionally, the transceiver module 1001 is further configured to receive a second notification message from a cluster management server, where the second notification message is used to notify the distributed database cluster to perform initialization, the second notification message includes identification information of a plurality of second target servers, and the plurality of second target servers include the third server. The processing module 1002 is further configured to: perform calculation on identification information of each of the plurality of second target servers by using a consistent hash algorithm, to obtain a hash value of each second target server, and map hash values of the plurality of second target servers to a consistent hash ring, to obtain corresponding positions of the hash values of the plurality of second target servers on the consistent hash ring; obtain a hash value of each of a plurality of preset storage spaces, and map hash values of the plurality of preset storage spaces to the consistent hash ring, to obtain corresponding positions of the hash values of the plurality of preset storage spaces on the consistent hash ring; determine initial statuses of the plurality of preset storage spaces based on the corresponding positions of the hash values of the plurality of second target servers on the consistent hash ring and the corresponding positions of the hash values of the plurality of preset storage spaces on the consistent hash ring; and mark initial statuses of all or a part of preset storage spaces in the plurality of preset storage spaces in the third server as valid states.

Optionally, the processing module 1002 is specifically configured to: perform calculation on the identification information of the first page by using the consistent hash algorithm, to obtain a hash value of the first page, and map the hash value of the first page to the consistent hash ring, to obtain a position of the hash value of the first page on the consistent hash ring; and determine, based on the position of the hash value of the first page on the consistent hash ring and the corresponding positions of the hash values of the plurality of second target servers on the consistent hash ring, that the page directory of the first page is stored in the first server.

Optionally, the processing module 1002 is further specifically configured to search, starting from a position of a hash value of the first server on the consistent hash ring, the consistent hash ring in a preset direction based on the corresponding positions of the hash values of the plurality of second target servers on the consistent hash ring, to determine the second server, where a corresponding position of a hash value of the second server on the consistent hash ring is after the first server and adjacent to the first server.

Optionally, the transceiver module 1001 is further configured to receive a first notification message from a cluster management server, where the first notification message is used to notify the distributed database cluster to add a server and/or delete a server, the first notification message includes identification information of a plurality of first target servers, and the plurality of first target servers include the second server. The processing module 1002 is further specifically configured to: perform calculation on the identification information of the first page by using a consistent hash algorithm, to obtain a hash value of the first page, and map the hash value of the first page to a consistent hash ring, to obtain a position of the hash value of the first page on the consistent hash ring; perform calculation on identification information of each of the plurality of first target servers by using the consistent hash algorithm, to obtain a hash value of each first target server, and map hash values of the plurality of first target servers to the consistent hash ring, to obtain corresponding positions of the hash values of the plurality of first target servers on the consistent hash ring; and determine, based on the position of the hash value of the first page on the consistent hash ring and the corresponding positions of the hash values of the plurality of first target servers on the consistent hash ring, that the page directory of the first page is stored in the second server.

Optionally, the transceiver module 1001 is further configured to: receive a second access request from a client, where the second access request is used to request to access a second page, and the second access request carries identification information of the second page. The processing module 1002 is further configured to determine, based on the identification information of the second page, that a page directory of the second page is stored in the second server. The transceiver module 1001 is further configured to: send a second query request to the second server, where the second query request is used to query for the page directory of the second page, and the second query request carries the identification information of the second page; and receive a second query response from the second server, where the second query response indicates that the query corresponding to the second query request fails. The processing module 1002 is further configured to redetermine, based on a preset redirection algorithm, that the page directory of the second page is stored in the first server. The transceiver module 1001 is further configured to: send the second query request to the first server; and receive the page directory of the second page from the first server.

Optionally, the processing module 1002 is further specifically configured to: perform calculation on the identification information of the second page by using the consistent hash algorithm, to obtain a hash value of the second page, and map the hash value of the second page to the consistent hash ring, to obtain a position of the hash value of the second page on the consistent hash ring; and determine, based on the position of the hash value of the second page on the consistent hash ring and the corresponding positions of the hash values of the plurality of second target servers on the consistent hash ring, that the page directory of the second page is stored in the first server.

It should be understood that the server 1000 herein is represented in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the server 1000 may be specifically the first server, the second server, or the third server in the foregoing embodiments, and the server 1000 may be configured to perform procedures and/or steps corresponding to the first server, the second server, or the third server in the foregoing method embodiments. To avoid repetition, details are not described herein again.

The server 1000 has a function of implementing a corresponding step performed by the first server, the second server, or the third server in the foregoing methods. The function may be implemented by hardware, or may be implemented by hardware executing corresponding software. The hardware or the software includes one or more modules corresponding to the function. For example, the transceiver module 1001 may include a sending module and a receiving module. The sending module may be configured to implement the steps and/or procedures that are used for executing the sending action and that correspond to the transceiver module, and the receiving module may be configured to implement the steps and/or procedures that are used for executing the receiving action and that correspond to the transceiver module. The sending module may be replaced by a transmitter, and the receiving module may be replaced by a receiver, to respectively perform sending and receiving operations and related processing operations in the method embodiments.

In this embodiment of this application, the server 1000 in FIG. 10 may alternatively be a chip or a chip system, for example, a system on chip (system on chip, SOC). Correspondingly, the transceiver module 1001 may be a transceiver circuit of the chip. This is not limited herein.

FIG. 11 is a block diagram of a server 1100 according to an embodiment of this application. The server 1100 includes a processor 1101, a transceiver 1102, and a memory 1103. The processor 1101, the transceiver 1102, and the memory 1103 communicate with each other through an internal connection path, the memory 1103 is configured to store instructions, and the processor 1101 is configured to execute the instructions stored in the memory 1103. The transceiver 1102 may be configured to send a request to or receive a response from another server in a distributed database cluster. For example, the transceiver 1102 reads the instructions stored in the memory 1103, and sends the instructions to the processor 1101.

It should be understood that the server 1100 may be specifically the first server, the second server, or the third server in the foregoing embodiments, and may be configured to perform steps and/or procedures corresponding to any server in the foregoing method embodiments. Optionally, the memory 1103 may include a read-only memory and a random access memory, and provide instructions and data to the processor. A part of the memory may further include a nonvolatile random access memory. For example, the memory may further store information of a device type. The processor 1101 may be configured to execute the instructions stored in the memory. When the processor 1101 executes the instructions stored in the memory, the processor 1101 is configured to perform steps and/or procedures in the foregoing method embodiments.

It should be noted that, the foregoing method embodiments may be applied to a processor, or implemented by a processor. The processor may be an integrated circuit chip, and has a signal processing capability. During implementation, steps in the foregoing method embodiments may be completed by using a hardware integrated logic circuit in the processor or instructions in a form of software. The processor may be a general-purpose processor, a DSP, an ASIC, an FPGA or another programmable logical device, a discrete gate or transistor logic device, or a discrete hardware component, and may implement or perform the methods, the steps, and logical block diagrams that are disclosed in embodiments of this application. The general-purpose processor may be a microprocessor, or the processor may be any conventional processor or the like. The steps in the methods disclosed in embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a ROM, a PROM, an EPROM, an EEPROM, or a flash memory. The volatile memory may be a RAM, and serves as an external cache. Through an example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a distributed database cluster, including at least the first server, the second server, and the third server, and configured to perform the method corresponding to the foregoing method embodiments.

This application further provides a system for implementing page access, including at least the first server, the second server, and the third server, and configured to perform the method corresponding to the foregoing method embodiments.

This application further provides a computer program product. The computer program product includes a computer program (which may also be referred to as code or instructions). When the computer program is run, a computer is enabled to perform the method performed by any server in the foregoing method embodiments.

This application further provides a computer-readable storage medium. The computer-readable storage medium stores a computer program (which may also be referred to as code or instructions). When the computer program is run, a computer is enabled to perform the method performed by any server in the foregoing method embodiments.

All or a part of the methods provided in the foregoing embodiments may be implemented by software, hardware, firmware, or any combination thereof. When software is used to implement the methods, all or a part of the methods may be implemented in a form of computer program product. The computer program product may include one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are executed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units may be electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions in this application essentially, or the part contributing to the conventional technology, or all or a part of the technical solutions may be represented in a form of software product. The computer software product is stored in a storage medium and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A method for implementing page access, wherein the method comprises:
when a server is added to and/or deleted from a distributed database cluster, sending, by a first server, a first page directory in a first preset storage space to a second server, deleting the first page directory, and marking a status of the first preset storage space in the first server as an invalid state, wherein the first page directory indicates a correspondence between at least one page and a server that stores the at least one page, each server in the distributed database cluster comprises a plurality of preset storage spaces of a same quantity, and each of the plurality of preset storage spaces is in a valid state in only one server;
receiving, by the first server, a first query request from a third server, wherein the first query request is used to query for a page directory of a first page, and the first query request carries identification information of the first page;
determining, by the first server based on the identification information of the first page, that a preset storage space corresponding to the page directory of the first page is the first preset storage space, and learning that the status of the first preset storage space in the first server is the invalid state; and
sending, by the first server, a first query response to the third server, wherein the query response indicates that the query corresponding to the first query request fails.

2. The method according to claim 1, wherein before sending, by the first server, the first page directory to the second server, the method further comprises:
receiving, by the first server, a first notification message from the cluster management server, wherein the first notification message is used to notify the distributed database cluster to add a server and/or delete a server, the first notification message comprises identification information of a plurality of first target servers, and the plurality of first target servers comprise the second server; and
determining, by the first server based on the identification information of the plurality of first target servers, to migrate the first page directory from the first preset storage space in the first server to the second server.

3. The method according to claim 2, wherein determining, by the first server based on the identification information of the plurality of first target servers, to migrate the first page directory from the first preset storage space in the first server to the second server comprises:
performing, by the first server, calculation on identification information of each of the plurality of first target servers by using a consistent hash algorithm, to obtain a hash value of each first server, and mapping hash values of the plurality of first target servers to a consistent hash ring, to obtain corresponding positions of the hash values of the plurality of first target servers on the consistent hash ring;
obtaining, by the first server, a hash value of each of the plurality of preset storage spaces, and mapping hash values of the plurality of preset storage spaces to the consistent hash ring, to obtain corresponding positions of the hash values of the plurality of preset storage spaces on the consistent hash ring; and
determining, by the first server based on the corresponding positions of the hash values of the plurality of first target servers on the consistent hash ring and the corresponding positions of the hash values of the plurality of preset storage spaces on the consistent hash ring, to migrate the first page directory from the first preset storage space in the first server to the second server, wherein the plurality of preset storage spaces comprise the first preset storage space.

4. The method according to any one of claims 1 to 3, wherein before sending, by the first server, the first page directory in the first preset storage space to the second server, the method further comprises:
determining, by the first server, identification information of a plurality of second target servers, wherein the plurality of second target servers comprise the first server; and
marking, by the first server based on the identification information of the plurality of second target servers, initial statuses of all or a part of preset storage spaces in the plurality of preset storage spaces in the first server as valid states, wherein the all or part of preset storage spaces comprise the first preset storage space.

5. The method according to claim 4, wherein before marking the initial statuses of the all or part of preset storage spaces in the plurality of preset storage spaces in the first server as the valid states, the method further comprises:
performing, by the first server, calculation on identification information of each of the plurality of second target servers by using the consistent hash algorithm, to obtain a hash value of each second target server, and mapping hash values of the plurality of second target servers to the consistent hash ring, to obtain corresponding positions of the hash values of the plurality of second target servers on the consistent hash ring;
obtaining, by the first server, the hash value of each of the plurality of preset storage spaces, and mapping the hash values of the plurality of preset storage spaces to the consistent hash ring, to obtain the corresponding positions of the hash values of the plurality of preset storage spaces on the consistent hash ring; and
determining, by the first server, initial statuses of the plurality of preset storage spaces based on the corresponding positions of the hash values of the plurality of second target servers on the consistent hash ring and the corresponding positions of the hash values of the plurality of preset storage spaces on the consistent hash ring.

6. The method according to claim 4 or 5, wherein determining, by the first server, the identification information of the plurality of second target servers comprises:
receiving, by the first server, a second notification message from the cluster management server, wherein the second notification message is used to notify the distributed database cluster to perform initialization, and the second notification message comprises the identification information of the plurality of second target servers; and
determining, by the first server, the identification information of the plurality of second target servers based on the second notification message.

7. The method according to any one of claims 1 to 6, wherein determining, by the first server based on the identification information of the first page, that the preset storage space corresponding to the page directory of the first page is the first preset storage space comprises:
performing, by the first server, calculation on the identification information of the first page by using the consistent hash algorithm, to obtain a hash value of the first page, and mapping the hash value of the first page to the consistent hash ring, to obtain a position of the first page on the consistent hash ring; and
determining, by the first server based on the position of the first page on the consistent hash ring and the corresponding positions of the hash values of the plurality of preset storage spaces on the consistent hash ring, that the first preset storage space is the preset storage space corresponding to the page directory of the first page.

8. The method according to any one of claims 1 to 7, wherein after sending the first page directory in the first preset storage space to the second server, the first server records identification information of the second server in the first preset storage space in the first server; and
after learning, by the first server, that the status of the first preset storage space in the first server is the invalid state, the method further comprises:
obtaining, by the first server, the identification information that is of the second server and that is recorded in the first preset storage space in the first server; and
sending, by the first server, the first query response to the third server, wherein the query response indicates that the query corresponding to the first query request fails, and the first query response carries the identification information of the second server.

9. The method according to any one of claims 1 to 8, wherein the first page directory is stored in the first preset storage space in the first server in a form of doubly linked list, or is stored in the first server in a form of hash table.

10. The method according to any one of claims 1 to 9, wherein the method further comprises:
receiving, by the first server, a second query request from the third server, wherein the second query request is used to query for a page directory of a second page, and the second query request carries identification information of the second page;
determining, by the first server based on the identification information of the second page, that a preset storage space corresponding to the page directory of the second page is a second preset storage space;
when finding that a status of the second preset storage space in the first server is a valid state, obtaining, by the first server, the page directory of the second page from the second preset storage space in the first server; and
sending, by the first server, the page directory of the second page to the third server.

11. A method for implementing page access, comprising:
receiving, by a second server, a first page directory, storing the first page directory in a first preset storage space in the second server, and marking a status of the first preset storage space in the second server as a valid state;
receiving, by the second server, a first query request from a third server, wherein the first query request is used to query for a page directory of the first page, and the first query request carries identification information of the first page;
determining, by the second server based on the identification information of the first page, that a preset storage space corresponding to the page directory of the first page is the first preset storage space, and learning that the status of the first preset storage space in the second server is the valid state;
obtaining, by the second server, the page directory of the first page from the first preset storage space in the second server; and
sending, by the second server, the page directory of the first page to the third server.

12. The method according to claim 11, wherein the first page directory is stored in the first preset storage space in the second server in a form of doubly linked list, and obtaining, by the second server, the page directory of the first page from the first preset storage space in the second server comprises:
searching, by the second server, the doubly linked list in a traversal manner based on the identification information of the first page, until a target node on which the page directory of the first page is stored in the doubly linked list is found, and obtaining the page directory of the first page from the target node.

13. The method according to claim 11, wherein the first page directory is stored in the second server in a form of hash table, and obtaining, by the second server, the page directory of the first page from the first preset storage space in the second server comprises:
performing, by the second server, calculation on the identification information of the first page by using a consistent hash algorithm, to obtain a hash value of the first page; and
finding, by the second server in the hash table, a target array corresponding to the hash value of the first page, and obtaining the page directory of the first page from the target array.

14. The method according to any one of claims 11 to 13, wherein the method further comprises:
receiving, by the second server, a second query request from the third server, wherein the second query request is used to query for a page directory of a second page, and the second query request carries identification information of the second page;
determining, by the second server based on the identification information of the second page, that a preset storage space corresponding to the page directory of the second page is a second preset storage space; and
when finding that a status of the second preset storage space in the second server is an invalid state, sending, by the second server, a query response to the third server, wherein the query response indicates that the query fails.

15. A method for implementing page access, comprising:
receiving, by a third server, a first access request from a client, wherein the first access request is used to request to access a first page, and the first access request carries identification information of the first page;
determining, by the third server based on the identification information of the first page, that a page directory of the first page is stored in a first server;
sending, by the third server, a first query request to the first server, wherein the first query request is used to query for the page directory of the first page, and the first query request carries the identification information of the first page;
receiving, by the third server, the first query response from the first server, wherein the first query response indicates that the query corresponding to the first query request fails;
redetermining, by the third server based on a preset redirection algorithm, that the page directory of the first page is stored in a second server;
sending, by the third server, the first query request to the second server; and
receiving, by the third server, the page directory of the first page from the second server.

16. The method according to claim 15, wherein the first query response carries identification information of the second server; and
redetermining, by the third server based on the preset redirection algorithm, that the page directory of the first page is stored in the second server comprises:
determining, by the third server based on the first query response, that the first page directory is stored in the second server.

17. The method according to claim 15 or 16, wherein before receiving, by the third server, the first access request from the client, the method further comprises:
receiving, by the third server, a second notification message from a cluster management server, wherein the second notification message is used to notify a distributed database cluster to perform initialization, the second notification message comprises identification information of a plurality of second target servers, and the plurality of second target servers comprise the third server;
performing, by the third server, calculation on identification information of each of the plurality of second target servers by using a consistent hash algorithm, to obtain a hash value of each second target server, and mapping hash values of the plurality of second target servers to a consistent hash ring, to obtain corresponding positions of the hash values of the plurality of second target servers on the consistent hash ring;
obtaining, by the third server, a hash value of each of a plurality of preset storage spaces, and mapping hash values of the plurality of preset storage spaces to the consistent hash ring, to obtain corresponding positions of the hash values of the plurality of preset storage spaces on the consistent hash ring;
determining, by the third server, initial statuses of the plurality of preset storage spaces based on the corresponding positions of the hash values of the plurality of second target servers on the consistent hash ring and the corresponding positions of the hash values of the plurality of preset storage spaces on the consistent hash ring; and
marking, by the third server, initial statuses of all or a part of preset storage spaces in the plurality of preset storage spaces in the third server as valid states.

18. The method according to claim 17, wherein determining, by the third server based on the identification information of the first page, that the page directory of the first page is stored in the first server comprises:
performing, by the third server, calculation on the identification information of the first page by using the consistent hash algorithm, to obtain a hash value of the first page, and mapping the hash value of the first page to the consistent hash ring, to obtain a position of the hash value of the first page on the consistent hash ring; and
determining, by the third server based on the position of the hash value of the first page on the consistent hash ring and the corresponding positions of the hash values of the plurality of second target servers on the consistent hash ring, that the page directory of the first page is stored in the first server.

19. The method according to claim 18, wherein redetermining, by the third server based on the preset redirection algorithm, that the page directory of the first page is stored in the second server comprises:
searching, by the third server starting from a position of a hash value of the first server on the consistent hash ring, the consistent hash ring in a preset direction based on the corresponding positions of the hash values of the plurality of second target servers on the consistent hash ring, to determine the second server, wherein a corresponding position of a hash value of the second server on the consistent hash ring is after the first server and adjacent to the first server.

20. The method according to claim 15, wherein after receiving, by the third server, the first query response from the first server, the method further comprises:
receiving, by the third server, a first notification message from a cluster management server, wherein the first notification message is used to notify a distributed database cluster to add a server and/or delete a server, the first notification message comprises identification information of a plurality of first target servers, and the plurality of first target servers comprise the second server; and
redetermining, by the third server based on the preset redirection algorithm, that the first page directory is stored in the second server comprises:
performing, by the third server, calculation on the identification information of the first page by using a consistent hash algorithm, to obtain a hash value of the first page, and mapping the hash value of the first page to a consistent hash ring, to obtain a position of the hash value of the first page on the consistent hash ring;
performing, by the third server, calculation on identification information of each of the plurality of first target servers by using the consistent hash algorithm, to obtain a hash value of each first target server, and mapping hash values of the plurality of first target servers to the consistent hash ring, to obtain corresponding positions of the hash values of the plurality of first target servers on the consistent hash ring; and
determining, by the third server based on the position of the hash value of the first page on the consistent hash ring and the corresponding positions of the hash values of the plurality of first target servers on the consistent hash ring, that the page directory of the first page is stored in the second server.

21. The method according to claim 20, wherein the method further comprises:
receiving, by the third server, a second access request from the client, wherein the second access request is used to request to access a second page, and the second access request carries identification information of the second page;
determining, by the third server based on the identification information of the second page, that a page directory of the second page is stored in the second server;
sending, by the third server, a second query request to the second server, wherein the second query request is used to query for the page directory of the second page, and the second query request carries the identification information of the second page;
receiving, by the third server, the second query response from the second server, wherein the second query response indicates that the query corresponding to the second query request fails;
redetermining, by the third server based on the preset redirection algorithm, that the page directory of the second page is stored in the first server;
sending, by the third server, the second query request to the first server; and
receiving, by the third server, the page directory of the second page from the first server.

22. The method according to claim 21, wherein redetermining, by the third server based on the preset redirection algorithm, that the page directory of the second page is stored in the first server comprises:
performing, by the third server, calculation on the identification information of the second page by using the consistent hash algorithm, to obtain a hash value of the second page, and mapping the hash value of the second page to the consistent hash ring, to obtain a position of the hash value of the second page on the consistent hash ring; and
determining, by the third server based on the position of the hash value of the second page on the consistent hash ring and corresponding positions of hash values of the plurality of second target servers on the consistent hash ring, that the page directory of the second page is stored in the first server.

23. A system for implementing page access, comprising: a first server configured to implement the method according to any one of claims 1 to 10, a second server configured to implement the method according to any one of claims 11 to 14, and a third server configured to implement the method according to any one of claims 15 to 22.

24. A distributed database cluster, comprising: a first server configured to implement the method according to any one of claims 1 to 10, a second server configured to implement the method according to any one of claims 11 to 14, and a third server configured to implement the method according to any one of claims 15 to 22.

25. A server, comprising a processor, wherein the processor is coupled to a memory, the memory is configured to store a computer program, and when the processor invokes the computer program, the server is enabled to perform the method according to any one of claims 1 to 10, or perform the method according to any one of claims 11 to 14, or perform the method according to any one of claims 15 to 22.

26. A computer-readable storage medium, configured to store a computer program, wherein the computer program comprises instructions for implementing the method according to any one of claims 1 to 10, or instructions for implementing the method according to any one of claims 11 to 14, or instructions for implementing the method according to any one of claims 15 to 22.

27. A computer program product, wherein the computer program product comprises instructions, and when the instructions are run on a computer, the computer is enabled to implement the method according to any one of claims 1 to 10, or implement the method according to any one of claims 11 to 14, or implement the method according to any one of claims 15 to 22.
